# EUROPÄISCHE PATENTSCHRIFT

(11) **EP 4 153 395 B1**
(45) Veröffentlichungstag und Bekanntmachung des Hinweises auf die Patenterteilung: **24.09.2025**
(21) Anmeldenummer: 21728853.9
(22) Anmeldetag: 20.05.2021
(51) Int. Cl.: B29C 44/04, B29C 44/08, B29C 44/44, B29C 44/58

(54) **FORMWERKZEUG ZUR VERARBEITUNG VON EXPANDIERBAREN ODER EXPANDIERTEN KUNSTSTOFFPARTIKELN**
MOULD FOR PROCESSING EXPANDABLE OR EXPANDED PLASTIC PARTICLES
MOULE POUR LE TRAITEMENT DE PARTICULES PLASTIQUES EXPANSIBLES OU EXPANSÉES

(30) Priorität: 22.05.2020 DE 102020113838
(43) Veröffentlichungstag der Anmeldung: 29.03.2023
(73) Patentinhaber: Siegfried Hofmann GmbH, 96215 Lichtenfels (DE)
(72) Erfinder: RAUSCHER, André, 96215 Lichtenfels (DE); BECK, Jonas, 96215 Lichtenfels (DE); HUBERT, René, 96215 Lichtenfels (DE); PLATSCH, Philipp, 96215 Lichtenfels (DE)
(74) Vertreter: Hafner & Kohl PartmbB
(86) Internationale Anmeldenummer: PCT/EP2021/063481
(87) Internationale Veröffentlichungsnummer: WO 2021/234096

(56) Entgegenhaltungen:
- EP-A1- 2 875 928
- JP-A- 2012 020 420
- JP-A- S61 130 026

## Beschreibung

Die Erfindung betrifft ein Formwerkzeug zur Verarbeitung von expandierbaren oder expandierten Kunststoffpartikeln zur Herstellung eines mehrkomponentigen Partikelschaumbauteils sowie ein Verfahren zur Verarbeitung von expandierbaren oder expandierten Kunststoffpartikeln zur Herstellung eines mehrkomponentigen Partikelschaumbauteils.

Die Herstellung von mehrkomponentigen Partikelschaumbauteilen, d. h. Partikelschaumbauteilen, welche aus wenigstens zwei sich in wenigstens einem chemischen Parameter und/oder physikalischen Parameter unterscheidenden expandierbaren oder expandierten Partikelschaummaterialien bestehen, ist aus dem Stand der Technik dem Grunde nach bekannt. Entsprechende Partikelschaumbauteile zeichnen sich durch lokal unterschiedliche strukturelle Eigenschaften aus, sodass ihr Eigenschaftsprofil für unterschiedliche Anwendungs- bzw. Einsatzgebiete von großem Interesse ist.

JP S61 130026 A offenbart ein Formwerkzeug gemäß dem Oberbegriff des Anspruchs 1.

Die hierfür bis dato eingesetzten Formwerkzeuge und Verfahren sind allerdings im Hinblick auf anlagen- wie auch prozesstechnische Aspekte verbesserungswürdig. Dies gilt insbesondere für die Realisierung einer effizienten und reproduzierbaren Herstellung mehrkomponentiger Partikelschaumbauteile hoher Güte.

Der Erfindung liegt die Aufgabe zugrunde, ein demgegenüber verbessertes Formwerkzeug zur Verarbeitung von expandierbaren oder expandierten Kunststoffpartikeln zur Herstellung eines mehrkomponentigen Partikelschaumbauteils sowie ein Verfahren zur Verarbeitung von expandierbaren oder expandierten Kunststoffpartikeln zur Herstellung eines mehrkomponentigen Partikelschaumbauteils anzugeben.

Die Aufgabe wird durch die Gegenstände der unabhängigen Ansprüche, d. h. insbesondere durch ein Formwerkzeug gemäß dem unabhängigen Anspruch 1, gelöst. Die hierzu abhängigen Ansprüche betreffen mögliche Ausführungsformen der Gegenstände der unabhängigen Ansprüche.

Ein erster Aspekt der Erfindung betrifft ein Formwerkzeug zur Verarbeitung von expandierbaren oder expandierten Kunststoffpartikeln ("Kunststoffpartikeln") aus einem expandierbaren oder expandierten Kunststoffpartikelmaterial ("Kunststoffpartikelmaterial") zur Herstellung eines mehrkomponentigen Partikelschaumbauteils. Das Formwerkzeug ist sonach zur Herstellung wenigstens eines mehrkomponentigen Partikelschaumbauteils eingerichtet. Bei einem mehrkomponentigen Partikelschaumbauteil handelt es sich um ein Bauteil, welches aus wenigstens zwei sich in wenigstens einem chemischen Parameter, wie z. B. der chemischen Zusammensetzung, und/oder physikalischen Parameter, wie z. B. der Dichte, der Partikelgröße, der Partikelform, etc., unterscheidenden Partikelschaummaterialien besteht. Das Formwerkzeug ist sonach eingerichtet, Kunststoffpartikel aus sich in wenigstens einem chemischen Parameter und/oder physikalischen Parameter unterscheidenden Partikelschaummaterialien zu verarbeiten, um ein mehrkomponentiges Partikelschaumbauteil herzustellen. Ein entsprechendes mehrkomponentiges Partikelschaumbauteil weist sonach einen durch ein erstes Formteil gebildeten ersten Partikelschaumbauteilbereich und wenigstens einen durch wenigstens ein weiteres Formteil gebildeten weiteren Partikelschaumbauteilbereich auf, wobei sich der erste Bereich in wenigstens einem chemischen Parameter und/oder physikalischen Parameter von dem wenigstens einen weiteren Bereich unterscheidet.

Bei den vermittels des Formwerkzeugs verarbeitbaren Kunststoffpartikeln kann es sich um noch nicht expandierte Kunststoffpartikel, um vorexpandierte Kunststoffpartikel oder um vollständig expandierte Kunststoffpartikel aus einem oder mehreren Kunststoffpartikelmaterialien handeln. Für noch nicht expandierte Kunststoffpartikel wie auch für ein vorexpandierte Kunststoffpartikel gilt typischerweise, dass diese expandierbar sind, d. h. in einem, z. B. durch ein temperiertes Prozessfluid thermisch induzierten, Expansionsvorgang (weiter) expandiert werden können. Die im Rahmen der Verarbeitung entsprechender Kunststoffpartikel unter Ausbildung des Partikelschaumbauteils erfolgende Verbindung der Kunststoffpartikel geht typischerweise mit einem entsprechenden (weiteren) Expansionsvorgang der Kunststoffpartikel einher. Für vollständig expandierte Kunststoffpartikel gilt typischerweise, dass diese nicht mehr (weiter) expandiert werden können. Die im Rahmen der Verarbeitung entsprechender Kunststoffpartikel unter Ausbildung des Partikelschaumbauteils erfolgende Verbindung der Kunststoffpartikel geht typischerweise nicht mit einem entsprechenden (weiteren) Expansionsvorgang der Kunststoffpartikel einher.

Konkret kann es sich bei entsprechenden Kunststoffpartikeln z. B. um Kunststoffpartikel aus einem Kunststoffpartikelmaterial auf Basis von Polyolefinen, d. h. insbesondere Polypropylen, auf Basis von thermoplastischen Elastomeren, d. h. insbesondere thermoplastischem Polyurethan, oder auf Basis von Polystyrol handeln.

Die vermittels des Formwerkzeugs verarbeitbaren Kunststoffpartikel sind vor ihrer Verarbeitung vermittels des Formwerkzeugs typischerweise nicht miteinander verbunden; die vermittels des Formwerkzeugs verarbeitbaren Kunststoffpartikel liegen vor ihrer Verarbeitung mit dem Formwerkzeug sonach typischerweise als lose Partikel, d. h. z. B. als partikuläre Schüttung, vor und werden entsprechend über wenigstens eine Befülleinrichtung des Formwerkzeugs als lose Partikel in das Formwerkzeug eingebracht.

Das Formwerkzeug kann ein- oder mehrteilig ausgeführt sein. In einer mehrteiligen Ausführung des Formwerkzeugs umfasst dieses wenigstens zwei, gegebenenfalls auch als Formwerkzeughälften zu bezeichnende bzw. zu erachtende, Formwerkzeugkörper.

Das Formwerkzeug bzw. jeweilige Formwerkzeugkörper umfasst bzw. umfassen wenigstens eine Formwerkzeug(körper)wandung. Die wenigstens eine Formwerkzeug(körper)wandung begrenzt bzw. definiert eine Formwerkzeugkavität. Die wenigstens eine Formwerkzeug(körper)wandung kann eine oder mehrere Formwerkzeug(körper)wandungsabschnitte umfassen. Die Formwerkzeug(körper)wandungsabschnitte können sich in wenigstens einer Raumebene und/oder -richtung erstreckend angeordnet oder ausgebildet sein. Die wenigstens eine Formwerkzeug(körper)wandung kann sonach z. B. zumindest abschnittsweise eben oder geneigt oder gekrümmt oder gewölbte angeordnet oder ausgebildet sein.

Die wenigstens eine Formwerkzeug(körper)wandung kann zumindest abschnittsweise mit einer Vielzahl an, insbesondere bohrungsartigen bzw. -förmigen oder düsenartigen bzw. -förmigen, Öffnungen versehen sein. Über entsprechende Öffnungen - diese können konkret z. B. schlitzartig bzw. -förmig ausgeführt sein - kann z. B. ein Prozessfluid, wie z. B. Dampf bzw. Heißdampf, in die Formwerkzeugkavität eingebracht werden. Alternativ oder ergänzend kann über entsprechende Öffnungen ein bestimmtes Druckniveau, wie z. B. ein Über- oder Unterdruck, in der Formwerkzeugkavität erzeugt oder aufrechterhalten werden.

Die Formwerkzeugkavität, d. h. insbesondere jeweilige im Weiteren näher erläuterte Teilvolumina der Formwerkzeugkavität - ist über dem Formwerkzeug zugeordnete Befülleinrichtungen sukzessive mit vermittels des Formwerkzeugs zu verarbeitenden Kunststoffpartikeln befüllbar. Dem Formwerkzeug sind typischerweise mehrere Befülleinrichtungen zugeordnet, über welche sich Kunststoffpartikel aus sich in wenigstens einem chemischen Parameter, wie z. B. der chemischen Zusammensetzung, und/oder physikalischen Parameter, wie z. B. der Dichte, der Partikelgröße, der Partikelform, etc., unterscheidenden Kunststoffpartikelmaterialien in die Formwerkzeugkavität einfüllen lassen. Beispielsweise können über eine erste Befülleinrichtung Kunststoffpartikel aus einem ersten Kunststoffpartikelmaterial in die Formwerkzeugkavität, d. h. insbesondere in ein ersten Teilvolumen der Formwerkzeugkavität, einfüllbar sein bzw. eingefüllt werden, und über wenigstens eine weitere Befülleinrichtung weitere Kunststoffpartikel aus einem sich in wenigstens einem chemischen Parameter und/oder physikalischen Parameter von dem ersten Kunststoffpartikelmaterial unterscheidenden weiteren bzw. zweiten Kunststoffpartikelmaterial in die Formwerkzeugkavität, d. h. insbesondere in ein weiteres bzw. zweites Teilvolumen der Formwerkzeugkavität, einfüllbar sein bzw. eingefüllt werden.

Entsprechende Befülleinrichtungen können eingerichtet sein, eine, insbesondere druckbeaufschlagte,, Förderströmung zu erzeugen, vermittels welcher die in die Formwerkzeugkavität einzufüllenden Kunststoffpartikel in die Formwerkzeugkavität gefördert werden können. Entsprechende Befülleinrichtungen umfassen typischerweise wenigstens eine Strömungserzeugungseinrichtung zur Erzeugung einer entsprechenden Förderströmung und wenigstens ein eine in die Formwerkzeugkavität mündende Förderstrecke begrenzendes bzw. definierendes, insbesondere rohrartiges bzw. -förmiges, Förderelement. Selbstverständlich sind andersartig konfigurierte Befülleinrichtungen denkbar. Lediglich beispielhaft sei in diesem Zusammenhang auf Befülleinrichtungen verwiesen, welche eine (weitgehend) drucklose Förderung von Kunststoffpartikeln und damit eine (weitgehend) drucklose Befüllung der Formwerkzeugkavität ermöglichen.

Das Formwerkzeug umfasst wenigstens ein schieberartiges oder -förmiges Formwerkzeugelement.

Eine erste Funktionalität des wenigstens einen Formwerkzeugelements besteht darin, wenigstens ein Teilvolumen der Formwerkzeugkavität einzunehmen und bedarfsweise freizugeben. Hierfür lässt sich das wenigstens eine Formwerkzeugelement in eine erste Ausrichtung und/oder Position und in wenigstens eine weitere Ausrichtung und/oder Position bewegen. Das wenigstens eine Formwerkzeugelement ist sonach zwischen einer ersten Ausrichtung und/oder Position und wenigstens einer von der ersten Ausrichtung und/oder Position verschiedenen weiteren Ausrichtung und/oder Position bewegbar gelagert. Das wenigstens eine Formwerkzeugelement ist damit in wenigstens einem translatorischen und/oder rotatorischen Bewegungsfreiheitsgrad bewegbar gelagert und entsprechend durch Bewegungen entlang wenigstens einer translatorischen und/oder rotatorischen Bewegungsbahn - dabei sind auch kombinierte Bewegungsbahnen in wenigstens zwei verschiedenen Bewegungsfreiheitsgraden denkbar, sodass z. B. schraubenartige bzw. -förmige Bewegungsbahnen denkbar sind - in die erste Ausrichtung und/oder Position und in die wenigstens eine weitere Ausrichtung und/oder Position überführbar. Konkrete Beispiele für entsprechende Bewegungsfreiheitsgrade bzw. Bewegungsbahnen sind lineare Bewegungsfreiheitsgrade bzw. Bewegungsbahnen entlang einer lineare Bewegungsachse oder Schwenkbewegungsfreiheitsgrade bzw. Schwenkbewegungsbahnen um eine Schwenkachse.

Hinsichtlich der ersten Ausrichtung und/oder Position des wenigstens einen Formwerkzeugelements und der wenigstens einen weiteren Ausrichtung und/oder Position des wenigstens einen Formwerkzeugelements sind - unabhängig von der konkreten Art der Bewegung - verschiedene Varianten denkbar:
In einer ersten beispielhaften Variante kann das wenigstens eine Formwerkzeugelement in der ersten Ausrichtung und/oder Position nicht in die Formwerkzeugkavität ragen, wobei es in der wenigstens einen weiteren Ausrichtung und/oder Position um ein gewisses Maß in die Formwerkzeugkavität ragt. Das wenigstens eine Formwerkzeugelement ist in der wenigstens einen weiteren Ausrichtung und/oder Position sonach im Vergleich zu der ersten Ausrichtung und/oder Position um eine bestimmte Wegstrecke in die Formwerkzeugkavität bewegt. Die erste Ausrichtung und/oder Position des wenigstens einen Formwerkzeugelements kann daher mit einem eingefahrenen Zustand des wenigstens einen Formwerkzeugelements und die wenigstens eine weitere Ausrichtung und/oder Position des wenigstens einen Formwerkzeugelements mit einem ausgefahrenen Zustand des wenigstens einen Formwerkzeugelements korreliert sein. In der ersten Ausrichtung und/oder Position kann das wenigstens eine Formwerkzeugelement, insbesondere mit einem der Formwerkzeugkavität zugewandten freien Ende, sonach bündig mit einer die Formwerkzeugkavität begrenzenden Formwerkzeug(körper)wandung abschließen. In der weiteren Ausrichtung und/oder Position kann das wenigstens eine Formwerkzeugelement im Vergleich zu der ersten Ausrichtung und/oder Position um ein gewisses Maß in die Formwerkzeugkavität und damit auch über die entsprechende Formwerkzeug(körper)wandung in die Formwerkzeugkavität ragen, sodass das wenigstens eine Formwerkzeugelement in der weiteren Ausrichtung und/oder Position ein Teilvolumen der Formwerkzeugkavität einnimmt.

In einer zweiten beispielhaften Variante kann das wenigstens eine Formwerkzeugelement in der ersten Ausrichtung und/oder Position um ein erstes Maß in die Formwerkzeugkavität ragen, wobei es in der weiteren Ausrichtung und/oder Position um ein von dem ersten Maß verschiedenes weiteres Maß in die Formwerkzeugkavität ragt. Das wenigstens eine Formwerkzeugelement ist in der ersten Ausrichtung und/oder Position sonach um eine bestimmte erste Wegstrecke in die Formwerkzeugkavität bewegt und in der wenigstens einen weiteren Ausrichtung und/oder Position im Vergleich zu der ersten Ausrichtung und/oder Position um eine bestimmte weitere Wegstrecke in die Formwerkzeugkavität bewegt. Die erste Ausrichtung und/oder Position des wenigstens einen Formwerkzeugelements kann auch hier mit einem (weiter) eingefahrenen Zustand des wenigstens einen Formwerkzeugelements und die weitere Ausrichtung und/oder Position des wenigstens einen Formwerkzeugelements mit einem (weiter) ausgefahrenen Zustand des wenigstens einen Formwerkzeugelements korreliert sein. In der ersten Ausrichtung und/oder Position kann das wenigstens eine Formwerkzeugelement, insbesondere mit einem der Formwerkzeugkavität zugewandten freien Ende, um ein erstes Maß bzw. eine erste Wegstrecke in die Formwerkzeugkavität und damit auch um ein erstes Maß bzw. eine erste Wegstrecke über eine Formwerkzeug(körper)wandung in die Formwerkzeugkavität ragen, sodass das wenigstens eine Formwerkzeugelement in der ersten Ausrichtung und/oder Position ein erstes Teilvolumen der Formwerkzeugkavität einnimmt. In der weiteren Ausrichtung und/oder Position kann das wenigstens eine Formwerkzeugelement im Vergleich zu der ersten Ausrichtung und/oder Position um ein weiteres Maß bzw. eine weitere Wegstrecke in die Formwerkzeugkavität und damit auch um ein weiteres Maß bzw. eine weitere Wegstrecke über die entsprechende Formwerkzeug(körper)wandung in die Formwerkzeugkavität ragen, sodass das wenigstens eine Formwerkzeugelement in der weiteren Ausrichtung und/oder Position ein weiteres Teilvolumen der Formwerkzeugkavität einnimmt. Das weitere Maß bzw. die weitere Wegstrecke ist typischerweise größer als das erste Maß bzw. die erste Wegstrecke.

Wie sich im Weiteren ergibt, ist es grundsätzlich möglich, dass das wenigstens eine Formwerkzeugelement zusätzlich in wenigstens eine zwischen jeweiligen ersten und weiteren Ausrichtungen und/oder Positionen liegende Ausrichtung und/oder Positionen bewegt werden kann.

Zur Überführung des wenigstens einen Formwerkzeugelements in jeweilige Ausrichtungen und/oder Positionen ist dem wenigstens einen Formwerkzeugelement typischerweise wenigstens eine Antriebseinrichtung zugeordnet. Eine entsprechende Antriebseinrichtung ist zur Erzeugung einer Antriebskraft und/oder eines Antriebsmoments eingerichtet, vermittels welche(r) sich das wenigstens eine Formwerkzeugelement in jeweilige Ausrichtungen und/oder Positionen bewegen lässt. Bei einer entsprechenden Antriebseinrichtung kann es sich z. B. um eine hydraulische oder pneumatische Antriebseinrichtung handeln. Eine entsprechende Antriebseinrichtung kann wenigstens ein hydraulisches oder pneumatisches Antriebselement umfassen, welches mit dem wenigstens einen Formwerkzeugelement koppelbar oder gekoppelt ist. Alternativ oder ergänzend kann es sich bei einer entsprechenden Antriebseinrichtung um eine (elektro)motorische Antriebseinrichtung handeln. Eine entsprechende Antriebseinrichtung kann wenigstens ein (elektro)motorisches Antriebselement umfassen, welches mit dem wenigstens einen Formwerkzeugelement koppelbar oder gekoppelt ist.

Eine zweite Funktionalität des wenigstens einen Formwerkzeugelements besteht darin, im Betrieb des Formwerkzeugs bedarfsweise ein Prozessfluid, wie z. B. Dampf bzw. Heißdampf, in die Formwerkzeugkavität einzubringen. Hierfür ist das wenigstens eine Formwerkzeugelement mit einer wenigstens einen sich innerhalb des Formwerkzeugelements erstreckenden, von einem Prozessfluid durchströmbaren Strömungskanal aufweisenden Strömungskanalstruktur ausgebildet oder umfasst eine solche. Ein entsprechender Strömungskanal erstreckt sich sonach in wenigstens einer Raumrichtung und/oder Raumebene zwischen einer Einströmöffnung, über welche ein Prozessfluid in den Strömungskanal bzw. in die Strömungskanalstruktur einströmbar ist, und wenigstens einer Ausströmöffnung, über welche ein Prozessfluid aus dem Strömungskanal bzw. aus der Strömungskanalstruktur in die Formwerkzeugkavität ausströmbar ist, durch das wenigstens eine Formwerkzeugelement. Wie sich im Weiteren ergibt, kann die Strömungskanalstruktur mehrere Strömungskanäle umfassen. Die Strömungskanäle können miteinander kommunizierend ausgebildet sein oder nicht miteinander kommunizierend ausgebildet sein.

Das wenigstens eine Formwerkzeugelement ist sonach typischerweise mit wenigstens einer, insbesondere düsenartigen oder -förmigen, Ausströmöffnung (Strömungsöffnung), über welche ein durch den wenigstens einen Strömungskanal bzw. die Strömungskanalstruktur strömendes Prozessfluid aus dem wenigstens einen Formwerkzeugelement in die Formwerkzeugkavität ausströmbar ist, ausgebildet oder umfasst eine solche.

Wie sich im Weiteren ergibt, erfolgt ein entsprechendes Ausströmen von Prozessfluid aus dem wenigstens einen Strömungskanal bzw. der Strömungskanalstruktur in die Formwerkzeugkavität insbesondere dann, wenn das wenigstens eine Formwerkzeugelement in eine entsprechende erste Ausrichtung und/oder Position und/oder in eine entsprechende weitere Ausrichtung und/oder Position bewegt ist oder wird.

Die Konfiguration des wenigstens einen Formwerkzeugelements ermöglicht eine effiziente und reproduzierbare Herstellung mehrkomponentiger Partikelschaumbauteile hoher Güte, sodass ein verbessertes Formwerkzeug zur Verarbeitung von Kunststoffpartikeln zur Herstellung mehrkomponentigen Partikelschaumbauteile vorliegt.

Das wenigstens eine Formwerkzeugelement, insbesondere die wenigstens eine Strömungskanalstruktur, zumindest abschnittsweise, gegebenenfalls vollständig, in einem additiven Fertigungsverfahren ausgebildet bzw. gefertigt sein. Die zumindest abschnittsweise, gegebenenfalls vollständige additive Ausbildung bzw. Fertigung des wenigstens einen Formwerkzeugelements, insbesondere der Strömungskanalstruktur, ermöglicht die Ausbildung von, insbesondere im Hinblick auf unerwünschte Energieverluste, d. h. insbesondere Druck- und/oder Temperaturverluste, optimierten Strömungskanalanordnungen und -geometrien, welche mit konventionellen Fertigungsverfahren nicht realisierbar sind. Insbesondere sind hochfiligrane Strömungskanalanordnungen und -geometrien realisierbar, welche mit konventionellen Fertigungsverfahren nicht realisierbar sind. Da es sich bei dem wenigstens einen Formwerkzeugelement - wie im Übrigen bei dem gesamten Formwerkzeug - typischerweise um ein metallisches Bauteil handelt, kommen zur Ausbildung bzw. Fertigung des wenigstens einen Formwerkzeugelements insbesondere additive Fertigungsverfahren in Betracht, mit welchen sich metallische Bauteile fertigen lassen. Lediglich beispielhaft sei in diesem Zusammenhang auf selektive Elektronenstrahl- oder Lasersinterverfahren, selektive Elektronenstrahl- oder Laserschmelzverfahren, Metal-Binder-Jetting-Verfahren zu verweisen. Denkbar sind jedoch auch nicht pulverbettbasierte additive Fertigungsverfahren, wie z. B. FFF- oder FDM-Verfahren.

Grundsätzlich ist es möglich, dass das wenigstens eine Formwerkzeugelement komplett additiv gefertigt ist. Sofern nur die Strömungskanalstruktur additiv gefertigt ist, kann diese, z. B. als Einsatzelement, in einen mit einer Aufnahmemöglichkeit für die Strömungskanalstruktur versehenen Grundkörper des wenigstens einen Formwerkzeugelements aufgenommen werden. Denkbar ist auch, dass die Strömungskanal im Sinne eines Hybridbauteils auf einem Grundkörper des Formwerkzeugelements additiv aufgebaut wird.

Die Strömungskanalstruktur kann wenigstens eine durch mehrere gitterartig oder -förmig angeordnete oder ausgebildete Strukturelemente umfassende Gitterstruktur umfassen. Entsprechende Strukturelemente können z. B. strebenartig- bzw. förmig ausgebildet sein. Die Gitterstruktur kann mehrere miteinander kommunizierende Teilräume definieren. Die Gitterstruktur kann sich in wenigstens einer Raumebene und/oder Raumrichtung durch das wenigstens eine Formwerkzeugelement erstreckend ausgebildet sein und nimmt daher typischerweise ein bestimmtes Raumvolumen des wenigstens einen Formwerkzeugelements ein. Die Gitterstruktur kann insbesondere im Bereich eines der Formwerkzeugkavität zugewandten freien Endes des wenigstens einen Formwerkzeugelements angeordnet oder ausgebildet sein und kann mit, insbesondere im Bereich eines der Formwerkzeugkavität zugewandten freien Endes, angeordneten oder ausgebildeten Ausströmöffnungen kommunizieren. Die Gitterstruktur kann sich zumindest abschnittsweise, insbesondere vollständig, über den Querschnitt des wenigstens einen Formwerkzeugelements erstreckend angeordnet oder ausgebildet sein und damit als Verteilerstruktur zur Verteilung eines durch das wenigstens eine Formwerkzeugelement strömenden Prozessfluids über den Querschnitt des wenigstens einen Formwerkzeugelements dienen. Die Gitterstruktur kann insbesondere in einem additiven Fertigungsverfahren ausgebildet bzw. gefertigt sein.

Wie erwähnt, ist das wenigstens eine Formwerkzeugelement mit wenigstens einer, insbesondere düsenartigen oder -förmigen, Ausströmöffnung (Strömungsöffnung) ausgebildet oder umfasst eine solche, über welche ein durch die Strömungskanalstruktur strömendes Prozessfluid aus dem wenigstens einen Formwerkzeugelement in die Formwerkzeugkavität ausströmbar ist. Insbesondere ist es möglich, dass das wenigstens eine Formwerkzeugelement mit einer Vielzahl sich über den kompletten Querschnitt des wenigstens einen Formwerkzeugelements erstreckend angeordneten oder ausgebildeten Ausströmöffnungen versehen ist, sodass ein Ausströmen eines Prozessfluids über den gesamten Querschnitt des wenigstens einen Formwerkzeugelements möglich ist. Denkbar ist es ebenso, dass verschiedene Ausströmbereiche definiert sind, über welche abhängig oder unabhängig voneinander ein Prozessfluid ausströmbar ist. Dies kann z. B. dadurch realisiert sein, dass einer ersten Anzahl an Ausströmöffnungen - diese können z. B. ein erstes Array an Ausströmöffnungen bilden - wenigstens ein erster Strömungskanal zugeordnet ist, sodass ein durch den wenigstens einen ersten Strömungskanal strömendes erstes Prozessfluid über die erste Anzahl an Ausströmöffnungen in die Formwerkzeugkavität ausströmbar ist, und wenigstens einer weiteren Anzahl an Ausströmöffnungen - diese können z. B. ein weiteres Array an Ausströmöffnungen bilden - wenigstens ein weiterer Strömungskanal zugeordnet ist, sodass ein durch den wenigstens einen weiteren Strömungskanal strömendes weiteres Prozessfluid über die weitere Anzahl an Ausströmöffnungen in die Formwerkzeugkavität ausströmbar ist. Ein entsprechendes ersten Prozessfluid kann sich von einem entsprechenden weiteren Prozessfluid in wenigstens einem chemischen Parameter, wie z. B. der chemischen Zusammensetzung, und/oder physikalischen Parameter, wie z. B. dem Druck, der Temperatur, etc., unterscheiden.

Die Strömungskanalstruktur des wenigstens einen Formwerkzeugelements kann mit einer eigenen, insbesondere von einer Prozessfluidversorgungseinrichtung der Formwerkzeugkavität - hierbei kann es sich z. B. um eine Dampfkammer handeln - unabhängig betreibbaren, Prozessfluidversorgungseinrichtung verbindbar oder verbunden sein. Das über das wenigstens eine Formwerkzeugelement in die Formwerkzeugkavität einströmbare Prozessfluid - hierbei kann es sich z. B. um Dampf bzw. Heißdampf handeln - kann sonach unabhängig von dem oder einem über jeweilige formwerkzeug(körper)wandungsseitige Öffnungen in die Formwerkzeugkavität einströmenden Prozessfluid bereitgestellt und bedarfsweise in die Formwerkzeugkavität eingebracht werden.

Das wenigstens einen Formwerkzeugelement kann wenigstens einen Aufnahmebereich zur Aufnahme eines in die Formwerkzeugkavität ragenden freien Endes einer Befülleinrichtung, insbesondere einer Befülleinrichtung zur Befüllung der Formwerkzeugkavität mit Kunststoffpartikeln aus einem sich von einem ersten Kunststoffpartikelmaterial in wenigstens einem chemischen Parameter und/oder physikalischen Parameter unterscheidenden weiteren bzw. zweiten Kunststoffpartikelmaterial, aufweisen. Ein entsprechender Aufnahmebereich kann z. B. durch eine Aussparung oder Vertiefung in dem wenigstens einen Formwerkzeugelement, d. h. insbesondere in einem der Formwerkzeugkavität zugewandten freien Ende des wenigstens einen Formwerkzeugelements, ausgebildet sein. Ein entsprechender Aufnahmebereich ist eingerichtet, mit einer entsprechenden Befülleinrichtung, d. h. insbesondere einem in die Formwerkzeugkavität ragenden freien Ende eines rohrartigen bzw. -förmigen Förderelements der Befülleinrichtung, derart zusammenwirken, dass das typischerweise mit wenigstens einer Öffnung zum Ausströmen von Kunststoffpartikel versehene freie Ende des Förderelements um ein gewisses Maß dichtend in den Aufnahmebereich eintaucht, mithin das wenigstens eine Formwerkzeugelement die wenigstens eine Öffnung zumindest abschnittsweise dichtend umschließt. Dieses Zusammenwirken ist insbesondere realisiert, wenn das wenigstens eine Formwerkzeugelement in die weitere Ausrichtung und/oder Position bewegt ist. Gleiches könnte durch ein dichtendes Anliegen des Förderelements an dem wenigstens einen Formwerkzeugelement realisiert sein.

Sämtliche vorstehenden Ausführungen im Zusammenhang mit dem wenigstens einen Formwerkzeugelement gelten analog für Ausführungsformen des Formwerkzeugs mit mehreren entsprechend konfigurierten Formwerkzeugelementen.

Wie sich im Weiteren ergibt, besteht eine Funktion des wenigstens einen Formwerkzeugelements im Betrieb des Formwerkzeugs insbesondere darin, durch entsprechende Bewegungen bedarfsweise Teilvolumina der Formwerkzeugkavität zu begrenzen bzw. zu definieren, welche bedarfsweise mit Kunststoffpartikeln befüllbar sind.

Dem Formwerkzeug kann eine hardware- und/oder softwaremäßig implementierte Steuerungseinrichtung zur Steuerung von Bewegungen des wenigstens einen Formwerkzeugelements von der ersten Ausrichtung und/oder Position in die wenigstens eine weitere bzw. eine zweite Ausrichtung und/oder Position, und umgekehrt, zugeordnet sein. Die Steuerungseinrichtung ist entsprechend eingerichtet, Steuerungsinformationen zur Steuerung des Betriebs wenigstens einer dem wenigstens einen Formwerkzeugelement zugeordneten Antriebseinrichtung zu erzeugen, um das wenigstens eine Formwerkzeugelement in die weitere bzw. zweite Ausrichtung und/oder Position zu bewegen. Die Antriebseinrichtung kann entsprechend auf Grundlage der Steuerungsinformationen betrieben sein bzw. werden. Die Steuerungseinrichtung kann insbesondere eingerichtet sein, das wenigstens eine Formwerkzeugelement vor Befüllen der Formwerkzeugkavität mit Kunststoffpartikeln aus einem ersten Kunststoffpartikelmaterial in die weitere bzw. zweite Ausrichtung und/oder Position zu bewegen. Dies kann insbesondere derart erfolgen, dass durch die Formwerkzeug(körper)wandungen und das wenigstens eine in die weitere bzw. zweite Ausrichtung und/oder Position bewegte Formwerkzeugelement ein mit Kunststoffpartikeln aus einem ersten Kunststoffpartikelmaterial befüllbares erstes Teilvolumen der Formwerkzeugkavität begrenzt bzw. definiert ist. Das mit Kunststoffpartikeln aus dem ersten Kunststoffpartikelmaterial befüllbare erste Teilvolumen der Formwerkzeugkavität ist gegenüber dem mit Kunststoffpartikelmaterial befüllbaren Volumen der Formwerkzeugkavität in der ersten Ausrichtung und/oder Position des wenigstens einen Formwerkzeugelements typischerweise um ein erstes Maß reduziert.

Dem Formwerkzeug kann ferner eine hardware- und/oder softwaremäßig implementierte Steuerungseinrichtung zur Steuerung von Befüllvorgängen der Formwerkzeugkavität, d. h. insbesondere des ersten Teilvolumens der Formwerkzeugkavität, mit Kunststoffpartikeln aus einem ersten Kunststoffpartikelmaterial zugeordnet sein. Die Steuerungseinrichtung ist entsprechend eingerichtet, Steuerungsinformationen zur Steuerung des Betriebs wenigstens einer dem Formwerkzeug zugeordneten Befülleinrichtung, insbesondere einer ersten Befülleinrichtung zur Befüllung der Formwerkzeugkavität, d. h. insbesondere des ersten Teilvolumens der Formwerkzeugkavität, mit Kunststoffpartikeln aus einem ersten Kunststoffpartikelmaterial, zu erzeugen, um Befüllvorgänge der Formwerkzeugkavität, d. h. insbesondere des ersten Teilvolumens der Formwerkzeugkavität, mit Kunststoffpartikeln aus einem ersten Kunststoffpartikelmaterial durchzuführen. Die Befülleinrichtung kann entsprechend auf Grundlage der Steuerungsinformationen betrieben sein bzw. werden. Die Steuerungseinrichtung kann insbesondere eingerichtet sein, einen Befüllvorgang des ersten Teilvolumens der Formwerkzeugkavität mit Kunststoffpartikeln aus einem ersten Kunststoffpartikelmaterial über eine Befülleinrichtung, insbesondere über eine erste Befülleinrichtung, durchzuführen, wenn das wenigstens eine Formwerkzeugelement in die weitere bzw. zweite Ausrichtung und/oder Position bewegt ist.

Dem Formwerkzeug kann ferner eine hardware- und/oder softwaremäßig implementierte Steuerungseinrichtung zur Steuerung von Maßnahmen zum Verbinden von in die Formwerkzeugkavität eingefüllten Kunststoffpartikeln zugeordnet sein. Die Steuerungseinrichtung kann eingerichtet sein, wenigstens eine Maßnahme zum Verbinden der in das erste Teilvolumen der Formwerkzeugkavität eingefüllten Kunststoffpartikel aus dem ersten Kunststoffpartikelmaterial unter Ausbildung eines aus dem ersten Kunststoffpartikelmaterial gebildeten ersten Formteils durchzuführen, wenn das erste Teilvolumen der Formwerkzeugkavität mit Kunststoffpartikeln aus dem ersten Kunststoffpartikelmaterial befüllt ist. Die Durchführung der Maßnahme zum Verbinden der Kunststoffpartikel aus dem ersten Kunststoffpartikelmaterial resultiert sonach in der Ausbildung eines aus dem ersten Kunststoffpartikelmaterial bestehenden ersten Formteils, welches ein Teilvolumen der Formwerkzeugkavität einnimmt.

Die Erfassung des bzw. eines, gegebenenfalls z. B. im Hinblick auf die gewünschten Eigenschaften eines herzustellenden mehrkomponentigen Partikelschaumbauteils, ausreichenden Füllzustands des ersten Teilvolumens der Formwerkzeugkavität mit Kunststoffpartikeln aus dem ersten Kunststoffpartikelmaterial kann über eine geeignete Erfassungseinrichtung zur Erfassung des Füllzustands der Formwerkzeugkavität, d. h. insbesondere des ersten Teilvolumens der Formwerkzeugkavität, realisiert werden. Eine entsprechende Erfassungseinrichtung kann ein oder mehrere Erfassungselemente, hierbei kann es sich z. B. um Drucksensoren handeln, umfassen, deren Erfassungsinformationen an die Steuerungseinrichtung übertragen werden können.

Die Maßnahme zum Verbinden von in die Formwerkzeugkavität eingefüllten Kunststoffpartikeln aus dem ersten Kunststoffpartikelmaterial kann ein Einbringen eines temperierten Prozessfluids, insbesondere Dampf, in das erste Teilvolumen der Formwerkzeugkavität, insbesondere über formwerkzeug(körper)seitige und/oder formwerkzeugelementseitige Öffnungen, umfassen. Die Steuerungseinrichtung kann sonach eingerichtet sein, das Einbringen eines temperierten Prozessfluids in das erste Teilvolumen der Formwerkzeugkavität zu steuern. Im Zusammenhang mit den formwerkzeug(körper)wandungsseitigen Öffnungen kann das Prozessfluid z. B. über eine dem Formwerkzeug zugeordnete Prozessfluidversorgungseinrichtung der Formwerkzeugkavität - diese kann z. B. als Dampfkammer ausgebildet sein - bereitgestellt sein bzw. werden. Im Zusammenhang mit den formwerkzeugelementseitigen Öffnungen kann das Prozessfluid, wie erwähnt, über eine eigene, insbesondere von einer Prozessfluidversorgungseinrichtung der Formwerkzeugkavität unabhängig betreibbaren, Prozessfluidversorgungseinrichtung bereitgestellt sein bzw. werden. Insbesondere es möglich, dass die Maßnahme durch Einbringen eines Prozessfluids nur über formwerkzeug(körper)wandungsseitige Öffnungen erfolgt.

Die zur Steuerung von Bewegungen des wenigstens einen Formwerkzeugelements eingerichtete Steuerungseinrichtung kann ferner eingerichtet sein, das wenigstens eine Formwerkzeugelement von der weiteren bzw. zweiten Ausrichtung und/oder Position in die erste Ausrichtung und/oder Position zu bewegen, wenn die Maßnahme zum Verbinden der Kunststoffpartikel aus dem ersten Kunststoffpartikelmaterial abgeschlossen ist. Die Steuerungseinrichtung ist entsprechend eingerichtet, Steuerungsinformationen zur Steuerung des Betriebs wenigstens einer dem wenigstens einen Formwerkzeugelement zugeordneten Antriebseinrichtung zu erzeugen, um das wenigstens eine Formwerkzeugelement von der weiteren bzw. zweiten Ausrichtung und/oder Position in die erste Ausrichtung und/oder Position zu bewegen. Die Antriebseinrichtung kann entsprechend auf Grundlage der Steuerungsinformationen betrieben sein bzw. werden. Dies kann insbesondere derart erfolgen, dass durch das erste Formteil und/oder die Formwerkzeug(körper)wandung und/oder das wenigstens eine in die erste Ausrichtung und/oder Position bewegte Formwerkzeugelement ein mit Kunststoffpartikel aus einem weiteren bzw. zweiten Kunststoffpartikelmaterial befüllbares weiteres bzw. zweites Teilvolumen der Formwerkzeugkavität begrenzt bzw. definiert ist.

Die Erfassung des Abschlusses der Maßnahme zum Verbinden der Kunststoffpartikel aus dem ersten Kunststoffpartikelmaterial kann über eine geeignete Erfassungseinrichtung zur Erfassung des Abschlusses der Maßnahme zum Verbinden der Kunststoffpartikel aus dem ersten Kunststoffpartikelmaterial, realisiert sein bzw. werden. Eine entsprechende Erfassungseinrichtung kann ein oder mehrere Erfassungselemente, hierbei kann es sich z. B. um Drucksensoren handeln, umfassen, deren Erfassungsinformationen an die Steuerungseinrichtung übertragen werden können.

Die zur Steuerung von Befüllvorgängen der Formwerkzeugkavität eingerichtete Steuerungseinrichtung kann eingerichtet sein, einen Befüllvorgang des weiteren bzw. zweiten Teilvolumens der Formwerkzeugkavität mit Kunststoffpartikeln aus einem sich von dem ersten Kunststoffpartikelmaterial in wenigstens einem chemischen Parameter und/oder physikalischen Parameter unterscheidenden weiteren bzw. zweiten Kunststoffpartikelmaterial über eine Befülleinrichtung, insbesondere über eine weitere bzw. zweite Befülleinrichtung zur Befüllung der Formwerkzeugkavität mit Kunststoffpartikeln aus einem sich von dem ersten Kunststoffpartikelmaterial in wenigstens einem chemischen Parameter und/oder physikalischen Parameter unterscheidenden weiteren bzw. zweiten Kunststoffpartikelmaterial, durchzuführen, wenn das wenigstens eine Formwerkzeugelement in die erste Ausrichtung und/oder Position bewegt ist. Die Steuerungseinrichtung ist entsprechend eingerichtet, Steuerungsinformationen zur Steuerung des Betriebs wenigstens einer dem Formwerkzeug zugeordneten Befülleinrichtung, insbesondere einer weiteren bzw. zweiten Befülleinrichtung, zu erzeugen, um Befüllvorgänge der Formwerkzeugkavität, d. h. insbesondere des weiteren bzw. zweiten Teilvolumens der Formwerkzeugkavität, mit Kunststoffpartikeln aus einem sich von dem ersten Kunststoffpartikelmaterial in wenigstens einem chemischen Parameter und/oder physikalischen Parameter unterscheidenden weiteren bzw. zweiten Kunststoffpartikelmaterial durchzuführen. Die Befülleinrichtung kann entsprechend auf Grundlage der Steuerungsinformationen betrieben sein bzw. werden.

Die Erfassung der Bewegung des wenigstens einen Formwerkzeugelements in die erste Ausrichtung und/oder Position kann über eine geeignete Erfassungseinrichtung zur Erfassung von Bewegungen des wenigstens einen Formwerkzeugelements in die erste Ausrichtung und/oder Position realisiert sein bzw. werden. Eine entsprechende Erfassungseinrichtung kann ein oder mehrere Erfassungselemente, hierbei kann es sich z. B. um Wegsensoren handeln, umfassen, deren Erfassungsinformationen an die Steuerungseinrichtung übertragen werden können.

Die zur Steuerung von Maßnahmen zum Verbinden von in die Formwerkzeugkavität eingefüllten Kunststoffpartikeln eingerichtete Steuerungseinrichtung kann eingerichtet sein, wenigstens eine Maßnahme zum Verbinden der in das weitere bzw. zweite Teilvolumen der Formwerkzeugkavität eingefüllten Kunststoffpartikel aus dem weiteren bzw. zweiten Kunststoffpartikelmaterial unter Ausbildung eines aus dem weiteren bzw. zweiten Kunststoffpartikelmaterial gebildeten weiteren zweiten Formteils durchzuführen, wenn das zweite Teilvolumen der Formwerkzeugkavität mit Kunststoffpartikeln aus dem weiteren bzw. zweiten Kunststoffpartikelmaterial befüllt ist. Die Durchführung der Maßnahme zum Verbinden der Kunststoffpartikel aus dem weiteren bzw. zweiten Kunststoffpartikelmaterial resultiert sonach in der Ausbildung eines aus dem weiteren bzw. zweiten Kunststoffpartikelmaterial bestehenden weiteren bzw. zweiten Formteils, welches ein Teilvolumen der Formwerkzeugkavität einnimmt. Das weitere bzw. zweite Formteil kann unter Ausbildung des herzustellenden mehrkomponentigen Partikelschaumbauteils insbesondere form-, und/oder kraft- und/oder stoffschlüssig mit dem ersten Formteil verbunden sein.

Die Erfassung des bzw. eines, gegebenenfalls z. B. im Hinblick auf die gewünschten Eigenschaften eines herzustellenden mehrkomponentigen Partikelschaumbauteils, ausreichenden Füllzustands des weiteren bzw. zweiten Teilvolumens der Formwerkzeugkavität mit Kunststoffpartikeln aus dem weiteren bzw. zweiten Kunststoffpartikelmaterial kann über eine geeignete Erfassungseinrichtung zur Erfassung des Füllzustands der Formwerkzeugkavität, d. h. insbesondere des weiteren bzw. zweiten Teilvolumens der Formwerkzeugkavität, realisiert werden. Eine entsprechende Erfassungseinrichtung kann ein oder mehrere Erfassungselemente, hierbei kann es sich z. B. um Drucksensoren handeln, umfassen, deren Erfassungsinformationen an die Steuerungseinrichtung übertragen werden können.

Die Maßnahme zum Verbinden von in die Formwerkzeugkavität eingefüllten Kunststoffpartikeln aus dem weiteren bzw. zweiten Kunststoffpartikelmaterial kann ein Einbringen eines temperierten Prozessfluids in das weitere bzw. zweite Teilvolumen der Formwerkzeugkavität, insbesondere über formwerkzeug(körper)wandungsseitige und/oder formwerkzeugelementseitige Öffnungen, umfassen. Im Zusammenhang mit den formwerkzeug(körper)wandungsseitigen Öffnungen kann das Prozessfluid z. B. über eine dem Formwerkzeug zugeordnete Prozessfluidversorgungseinrichtung der Formwerkzeugkavität - diese kann z. B. als Dampfkammer ausgebildet sein - bereitgestellt sein bzw. werden. Im Zusammenhang mit den formwerkzeugelementseitigen Öffnungen kann das Prozessfluid, wie erwähnt, über eine eigene, insbesondere von einer Prozessfluidversorgungseinrichtung der Formwerkzeugkavität unabhängig betreibbaren, Prozessfluidversorgungseinrichtung bereitgestellt sein bzw. werden. Insbesondere es möglich, dass die Maßnahme durch Einbringen eines Prozessfluids nur über formwerkzeugelementseitige Ausströmöffnungen erfolgt.

Dem Formwerkzeug kann ferner eine hardware- und/oder softwaremäßig implementierte Steuerungseinrichtung zur Steuerung von Maßnahmen zum Evakuieren und/oder Kühlen der Formwerkzeugkavität zugeordnet sein. Die Steuerungseinrichtung kann eingerichtet sein, eine Maßnahme zum Evakuieren und/oder Kühlen der Formwerkzeugkavität über eine Einrichtung zum Evakuieren und/oder Kühlen der Formwerkzeugkavität durchzuführen, wenn die Maßnahme zum Verbinden von in die Formwerkzeugkavität eingefüllten Kunststoffpartikeln aus dem zweiten Kunststoffpartikelmaterial abgeschlossen ist. Das Evakuieren und/oder Kühlen der Formwerkzeugkavität kann z. B. über einzelne, mehrere oder sämtliche formwerkzeug(körper)wandungsseitige Öffnungen und/oder formwerkzeugelementseitige Ausströmöffnungen erfolgen.

Die Erfassung des Abschlusses der Maßnahme zum Verbinden der Kunststoffpartikel aus dem weiteren bzw. zweiten Kunststoffpartikelmaterial kann über eine geeignete Erfassungseinrichtung zur Erfassung des Abschlusses der Maßnahme zum Verbinden der Kunststoffpartikel aus dem zweiten Kunststoffpartikelmaterial, realisiert sein bzw. werden. Eine entsprechende Erfassungseinrichtung kann ein oder mehrere Erfassungselemente, hierbei kann es sich z. B. um Drucksensoren handeln, umfassen, deren Erfassungsinformationen an die Steuerungseinrichtung übertragen werden können.

Die nachfolgenden Ausführungen zeigen an, dass sich mit dem Formwerkzeug auch drei- oder mehrkomponentige Partikelschaumbauteile herstellen lassen:
Die zur Steuerung von Bewegungen des wenigstens einen Formwerkzeugelements eingerichtete Steuerungseinrichtung kann hier eingerichtet sein, das wenigstens eine Formwerkzeugelement von der bzw. einer zweiten Ausrichtung und/oder Position in eine weitere bzw. dritte Ausrichtung und/oder Position zu bewegen, wenn die wie weiter oben beschrieben erfolgende Maßnahme zum Verbinden der Kunststoffpartikel aus dem ersten Kunststoffpartikelmaterial abgeschlossen ist. Die Steuerungseinrichtung ist entsprechend eingerichtet, Steuerungsinformationen zur Steuerung des Betriebs wenigstens einer dem wenigstens einen Formwerkzeugelement zugeordneten Antriebseinrichtung zu erzeugen, um das wenigstens eine Formwerkzeugelement in die weitere bzw. dritte Ausrichtung und/oder Position zu bewegen. Die Antriebseinrichtung kann entsprechend auf Grundlage der Steuerungsinformationen betrieben sein bzw. werden. Dies kann insbesondere derart erfolgen, dass durch das erste Formteil und/oder die Formwerkzeug(körper)wandung und/oder das wenigstens eine in die weitere bzw. dritte Ausrichtung und/oder Position bewegte Formwerkzeugelement ein mit Kunststoffpartikel aus einem zweiten Kunststoffpartikelmaterial befüllbares zweites Teilvolumen der Formwerkzeugkavität begrenzt bzw. definiert ist.

Die zur Steuerung von Befüllvorgängen der Formwerkzeugkavität eingerichtete Steuerungseinrichtung kann eingerichtet sein, einen Befüllvorgang des zweiten Teilvolumens der Formwerkzeugkavität mit Kunststoffpartikeln aus einem sich von dem ersten Kunststoffpartikelmaterial in wenigstens einem chemischen Parameter und/oder physikalischen Parameter unterscheidenden zweiten Kunststoffpartikelmaterial über eine Befülleinrichtung, insbesondere über eine zweite Befülleinrichtung zur Befüllung der Formwerkzeugkavität mit Kunststoffpartikeln aus einem sich von dem ersten Kunststoffpartikelmaterial in wenigstens einem chemischen Parameter und/oder physikalischen Parameter unterscheidenden zweiten Kunststoffpartikelmaterial, durchzuführen, wenn das wenigstens eine Formwerkzeugelement in die zweite Ausrichtung und/oder Position bewegt ist. Die Steuerungseinrichtung ist entsprechend eingerichtet, Steuerungsinformationen zur Steuerung des Betriebs wenigstens einer dem Formwerkzeug zugeordneten Befülleinrichtung, insbesondere einer weiteren bzw. zweiten Befülleinrichtung, zu erzeugen, um Befüllvorgänge des zweiten Teilvolumens der Formwerkzeugkavität mit Kunststoffpartikeln aus einem sich von dem ersten Kunststoffpartikelmaterial in wenigstens einem chemischen Parameter und/oder physikalischen Parameter unterscheidenden zweiten Kunststoffpartikelmaterial durchzuführen. Die Befülleinrichtung kann entsprechend auf Grundlage der Steuerungsinformationen betrieben sein bzw. werden

Die zur Steuerung von Maßnahmen zum Verbinden von in die Formwerkzeugkavität eingefüllten Kunststoffpartikeln eingerichtete Steuerungseinrichtung kann eingerichtet sein, wenigstens eine Maßnahme zum Verbinden der in das zweite Teilvolumen eingefüllten Kunststoffpartikel aus dem zweiten Kunststoffpartikelmaterial unter Ausbildung eines aus dem zweiten Kunststoffpartikelmaterial gebildeten zweiten Formteils durchzuführen, wenn das zweite Teilvolumen der Formwerkzeugkavität mit Kunststoffpartikeln aus dem zweiten Kunststoffpartikelmaterial befüllt ist. Die Durchführung der Maßnahme zum Verbinden der Kunststoffpartikel aus dem zweiten Kunststoffpartikelmaterial resultiert sonach in der Ausbildung eines aus dem zweiten Kunststoffpartikelmaterial bestehenden zweiten Formteils, welches ein Teilvolumen der Formwerkzeugkavität einnimmt. Das zweite Formteil kann unter insbesondere form-, und/oder kraft- und/oder stoffschlüssig mit dem ersten Formteil verbunden sein.

Die Maßnahme zum Verbinden von in die Formwerkzeugkavität eingefüllten Kunststoffpartikeln aus dem zweiten Kunststoffpartikelmaterial kann ein Einbringen eines temperierten Prozessfluids in das zweite Teilvolumen der Formwerkzeugkavität, insbesondere über formwerkzeug(körper)wandungsseitige und/oder formwerkzeugelementseitige Öffnungen, umfassen.

Die zur Steuerung von Bewegungen des wenigstens einen Formwerkzeugelements eingerichtete Steuerungseinrichtung kann hier ferner eingerichtet sein, das wenigstens eine Formwerkzeugelement von der weiteren bzw. dritten Ausrichtung und/oder Position in die erste Ausrichtung und/oder Position zu bewegen, wenn die Maßnahme zum Verbinden der Kunststoffpartikel aus dem zweiten Kunststoffpartikelmaterial abgeschlossen ist. Die Steuerungseinrichtung ist entsprechend eingerichtet, Steuerungsinformationen zur Steuerung des Betriebs wenigstens einer dem wenigstens einen Formwerkzeugelement zugeordneten Antriebseinrichtung zu erzeugen, um das wenigstens eine Formwerkzeugelement von der weiteren bzw. dritten Ausrichtung und/oder Position in die erste Ausrichtung und/oder Position zu bewegen. Die Antriebseinrichtung kann entsprechend auf Grundlage der Steuerungsinformationen betrieben sein bzw. werden. Dies kann insbesondere derart erfolgen, dass durch das erste Formteil und/oder das zweite Formteil und/oder die Formwerkzeug(körper)wandung und/oder das wenigstens eine in die weitere bzw. dritte Ausrichtung und/oder Position bewegte Formwerkzeugelement ein mit Kunststoffpartikel aus einem weiteren bzw. zweiten Kunststoffpartikelmaterial befüllbares weiteres bzw. drittes Teilvolumen der Formwerkzeugkavität begrenzt bzw. definiert ist.

Die zur Steuerung von Befüllvorgängen der Formwerkzeugkavität eingerichtete Steuerungseinrichtung kann eingerichtet sein, einen Befüllvorgang des weiteren bzw. dritten Teilvolumens der Formwerkzeugkavität mit Kunststoffpartikeln aus einem sich von dem ersten Kunststoffpartikelmaterial und/oder dem zweiten Kunststoffpartikelmaterial in wenigstens einem chemischen Parameter und/oder physikalischen Parameter unterscheidenden weiteren bzw. dritten Kunststoffpartikelmaterial über eine Befülleinrichtung, insbesondere über eine weitere bzw. dritte Befülleinrichtung zur Befüllung der Formwerkzeugkavität, d. h. insbesondere des weiteren bzw. dritten Teilvolumens der Formwerkzeugkavität, mit Kunststoffpartikeln aus einem sich von dem ersten Kunststoffpartikelmaterial und/oder dem zweiten Kunststoffpartikelmaterial in wenigstens einem chemischen Parameter und/oder physikalischen Parameter unterscheidenden weiteren bzw. dritten Kunststoffpartikelmaterial, durchzuführen, wenn das wenigstens eine Formwerkzeugelement in die erste Ausrichtung und/oder Position bewegt ist. Die Steuerungseinrichtung ist entsprechend eingerichtet, Steuerungsinformationen zur Steuerung des Betriebs wenigstens einer dem Formwerkzeug zugeordneten Befülleinrichtung, insbesondere einer weiteren bzw. dritten Befülleinrichtung, zu erzeugen, um Befüllvorgänge der Formwerkzeugkavität, d. h. insbesondere des weiteren bzw. dritten Teilvolumens der Formwerkzeugkavität, mit Kunststoffpartikeln aus einem sich von dem ersten Kunststoffpartikelmaterial und/oder dem zweiten Kunststoffpartikelmaterial in wenigstens einem chemischen Parameter und/oder physikalischen Parameter unterscheidenden weiteren bzw. dritten Kunststoffpartikelmaterial, durchzuführen. Die Befülleinrichtung kann entsprechend auf Grundlage der Steuerungsinformationen betrieben sein bzw. werden.

Die zur Steuerung von Maßnahmen zum Verbinden von in die Formwerkzeugkavität eingefüllten Kunststoffpartikeln eingerichtete Steuerungseinrichtung kann eingerichtet sein, wenigstens eine Maßnahme zum Verbinden der in das weitere bzw. dritte Teilvolumen eingefüllten Kunststoffpartikel aus dem weiteren bzw. dritten Kunststoffpartikelmaterial unter Ausbildung eines aus dem weiteren bzw. dritten Kunststoffpartikelmaterial gebildeten weiteren bzw. dritten Formteils durchzuführen, wenn das weitere bzw. dritte Teilvolumen der Formwerkzeugkavität mit Kunststoffpartikeln aus dem weiteren bzw. dritten Kunststoffpartikelmaterial befüllt ist. Die Durchführung der Maßnahme zum Verbinden der Kunststoffpartikel aus dem weiteren bzw. dritten Kunststoffpartikelmaterial resultiert sonach in der Ausbildung eines aus dem weiteren bzw. dritten Kunststoffpartikelmaterial bestehenden weiteren bzw. dritten Formteils, welches ein Teilvolumen der Formwerkzeugkavität einnimmt. Das weitere bzw. dritte Formteil kann unter Ausbildung des herzustellenden mehrkomponentigen Partikelschaumbauteils insbesondere form-, und/oder kraft- und/oder stoffschlüssig mit dem ersten Formteil und/oder dem zweiten Formteil verbunden sein.

Die Maßnahme zum Verbinden von in die Formwerkzeugkavität eingefüllten Kunststoffpartikeln aus dem weiteren bzw. dritten Kunststoffpartikelmaterial kann ein Einbringen eines temperierten Prozessfluids in das weitere bzw. dritte Teilvolumen der Formwerkzeugkavität, insbesondere über formwerkzeug(körper)wandungsseitige und/oder formwerkzeugelementseitige Öffnungen, umfassen.

Wiederum kann dem Formwerkzeug eine hardware- und/oder softwaremäßig implementierte Steuerungseinrichtung zur Steuerung von Maßnahmen zum Evakuieren und/oder Kühlen der Formwerkzeugkavität zugeordnet sein. Die Steuerungseinrichtung ist entsprechend eingerichtet, eine Maßnahme zum Evakuieren und/oder Kühlen der Formwerkzeugkavität über eine Einrichtung zum Evakuieren und/oder Kühlen der Formwerkzeugkavität durchzuführen, wenn die Maßnahme zum Verbinden von in die Formwerkzeugkavität eingefüllten Kunststoffpartikeln aus dem weiteren bzw. dritten Kunststoffpartikelmaterial abgeschlossen ist.

Für alle Ausführungsformen gilt, dass die geometrisch-konstruktive Gestaltung des wenigstens einen Formwerkzeugelements typischerweise anwendungsabhängig gewählt ist. Neben vergleichsweise einfachen geometrisch-konstruktiven Gestaltungen, wie z. B. quaderartigen bzw. -förmigen, zylinderartigen bzw. -förmigen Gestaltungen, sind auch komplexere geometrisch-konstruktive Gestaltungen, wie z. B. spiral- oder wendelartigen bzw. -förmige Gestaltungen denkbar. grundsätzlich sind auch geometrisch nicht eindeutig definierbare Freiformgestaltungen denkbar.

Für alle Ausführungsformen gilt ferner, dass das wenigstens eine Formwerkzeugelement typischerweise in einer hierfür formwerkzeugseitigen Aufnahme bzw. Lagerung gelagert ist. Das Formwerkzeug kann sonach mit wenigstens einem, z. B. bohrungsartigen bzw. -förmigen, Aufnahme- bzw. Lagerungsabschnitt - hierbei kann es sich konkret z. B. um eine Lagerbohrung handeln, in welcher ein entsprechendes Formwerkzeugelement, insbesondere passgenau, einsetzbar ist - ausgestattet sein.

Für alle Ausführungsformen gilt ferner, dass einzelne, mehrere oder sämtliche der vorgenannten Steuerungseinrichtungen hardware- und/oder softwaremäßige Bestandteile einer übergeordneten Steuerungseinrichtung, insbesondere einer übergeordneten Steuerungseinrichtung zur Steuerung des Betriebs des Formwerkzeugs sein können.

Für alle Ausführungsformen gilt ferner, dass einzelne, mehrere oder sämtliche der vorgenannten Erfassungseinrichtungen hardware- und/oder softwaremäßige Bestandteile einer übergeordneten Erfassungseinrichtung sein können.

Wie erwähnt, kann das Formwerkzeug mehrere entsprechend zwischen einer ersten Ausrichtung und/oder Position und wenigstens einer weiteren Ausrichtung und/oder Position bewegbar gelagerte Formwerkzeugelemente umfassen. Dabei können wenigstens zwei Formwerkzeugelemente in ihren jeweiligen weiteren Ausrichtungen und/oder Positionen sich parallel oder nicht-parallel zueinander in die Formwerkzeugkavität erstrecken. Mithin können sich wenigstens zwei Formwerkzeugelemente in ihren jeweiligen weiteren Ausrichtungen und/oder Positionen von derselben oder unterschiedlichen Formwerkzeug(körper)wandungen in die Formwerkzeugkavität erstrecken.

Ein zweiter Aspekt der Erfindung betrifft ein Formwerkzeugelement für ein Formwerkzeug gemäß dem ersten Aspekt der Erfindung. Das typischerweise schieberartig bzw. -förmig ausgebildete Formwerkzeugelement ist zwischen einer ersten Ausrichtung und/oder Position und wenigstens einer weiteren Ausrichtung und/oder Position bewegbar gelagert, und ist mit einer wenigstens einen sich innerhalb des Formwerkzeugelements erstreckenden, von einem Prozessfluid durchströmbaren Strömungskanal aufweisenden Strömungskanalstruktur ausgebildet oder umfasst eine solche.

Ein dritter Aspekt der Erfindung betrifft eine, gegebenenfalls auch als Formteilautomat bezeichenbare, Vorrichtung zur Verarbeitung von expandierbaren oder expandierten Kunststoffpartikeln Herstellung eines mehrkomponentigen Partikelschaumbauteils. Die Vorrichtung umfasst wenigstens ein Formwerkzeug gemäß dem ersten Aspekt der Erfindung, wenigstens eine Befülleinrichtung zur Befüllung der Formwerkzeugkavität des Formwerkzeugs mit Kunststoffpartikeln aus einem Kunststoffpartikelmaterial, wenigstens eine Antriebseinrichtung zur Erzeugung einer Antriebskraft und/oder eines Antriebsmoments, über welche(s) sich das wenigstens eine Formwerkzeugelement in jeweilige Ausrichtungen und/oder Positionen bewegen lässt, sowie wenigstens eine Prozessfluidversorgungseinrichtung zur Versorgung der Formwerkzeugkavität mit einem Prozessfluid.

Ein vierter Aspekt der Erfindung betrifft ein Verfahren zur Verarbeitung von expandierbaren oder expandierten Kunststoffpartikeln Herstellung eines mehrkomponentigen Partikelschaumbauteils. Zur Durchführung des Verfahrens wird ein Formwerkzeug gemäß dem ersten Aspekt der Erfindung und/oder ein Formwerkzeugelement gemäß dem zweiten Aspekt der Erfindung und/oder eine Vorrichtung gemäß dem dritten Aspekt der Erfindung verwendet.

Das Verfahren beinhaltet insbesondere die im Zusammenhang mit dem Betrieb des Formwerkzeugs zur Herstellung eines mehrkomponentigen Partikelschaumbauteils erläuterten Bewegungen des wenigstens einen Formwerkzeugelements, die Füllvorgänge jeweiliger durch entsprechende Bewegungen des wenigstens einen Formwerkzeugelements erzeugter Teilvolumina der Formwerkzeugkavität, die Verbindungsvorgänge jeweiliger in jeweilige Teilvolumina der Formwerkzeugkavität eingefüllter Kunststoffpartikel.

Sämtliche Ausführungen im Zusammenhang mit dem Formwerkzeug gelten analog für das Formwerkzeugelement und/oder für die Vorrichtung und/oder für das Verfahren.

Die Erfindung ist anhand von Ausführungsbeispielen in den Zeichnungen näher erläutert. Dabei zeigt:
Fig. 1 - 6 jeweils eine Prinzipdarstellung eines Formwerkzeugs gemäß einem ersten Ausführungsbeispiel;
Fig. 7 - 15 jeweils eine Prinzipdarstellung eines Formwerkzeugs gemäß einem weiteren Ausführungsbeispiel; und
Fig. 16 eine Prinzipdarstellung eines Formwerkzeugs gemäß einem weiteren Ausführungsbeispiel.

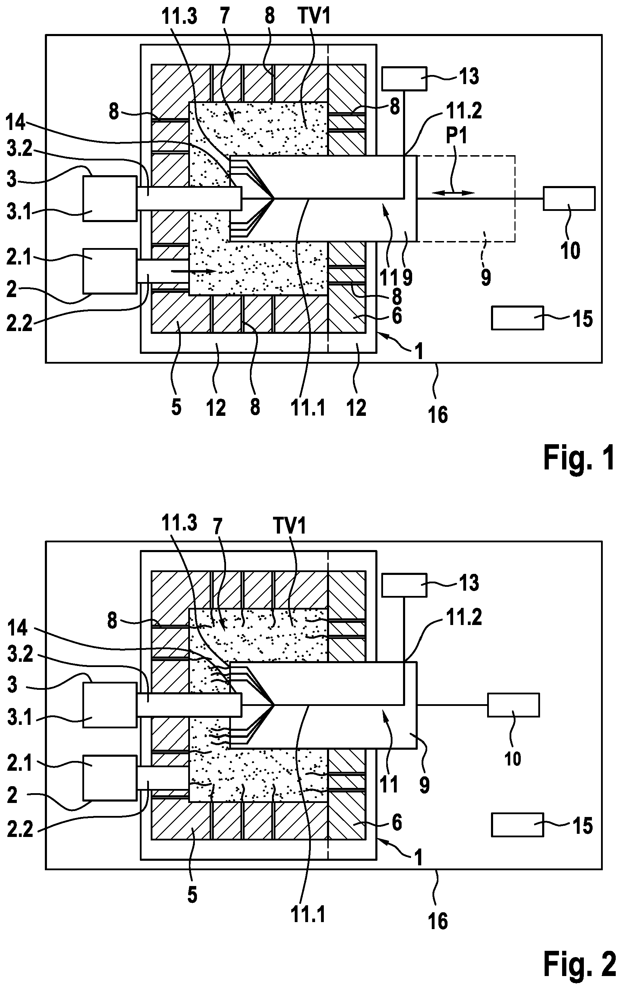

Die Fig. 1 - 6 jeweils eine Prinzipdarstellung eines Formwerkzeugs 1 gemäß einem ersten Ausführungsbeispiel.

Das Formwerkzeug 1 ist zur Verarbeitung von expandierbaren oder expandierten Kunststoffpartikeln ("Kunststoffpartikeln") aus einem expandierbaren oder expandierten Kunststoffpartikelmaterial ("Kunststoffpartikelmaterial") zur Herstellung eines mehrkomponentigen Partikelschaumbauteils eingerichtet. Das Formwerkzeug 1 ist sonach eingerichtet, Kunststoffpartikel aus sich in wenigstens einem chemischen Parameter und/oder physikalischen Parameter unterscheidenden Partikelschaummaterialien zu verarbeiten, um ein mehrkomponentiges Partikelschaumbauteil herzustellen. Ein entsprechendes mehrkomponentiges Partikelschaumbauteil weist sonach einen durch ein erstes Formteil gebildeten ersten Partikelschaumbauteilbereich und wenigstens einen durch wenigstens ein weiteres Formteil gebildeten weiteren Partikelschaumbauteilbereich auf, wobei sich der erste Bereich in wenigstens einem chemischen Parameter und/oder physikalischen Parameter von dem wenigstens einen weiteren Bereich unterscheidet.

Bei den vermittels des Formwerkzeugs verarbeitbaren Kunststoffpartikeln kann es sich um noch nicht expandierte Kunststoffpartikel, um vorexpandierte Kunststoffpartikel oder um vollständig expandierte Kunststoffpartikel aus einem oder mehreren Kunststoffpartikelmaterialien handeln. Für noch nicht expandierte Kunststoffpartikel wie auch für ein vorexpandierte Kunststoffpartikel gilt typischerweise, dass diese expandierbar sind, d. h. in einem, z. B. durch ein temperiertes Prozessfluid thermisch induzierten, Expansionsvorgang (weiter) expandiert werden können. Die im Rahmen der Verarbeitung entsprechender Kunststoffpartikel unter Ausbildung des Partikelschaumbauteils erfolgende Verbindung der Kunststoffpartikel geht typischerweise mit einem entsprechenden (weiteren) Expansionsvorgang der Kunststoffpartikel einher. Für vollständig expandierte Kunststoffpartikel gilt typischerweise, dass diese nicht mehr (weiter) expandiert werden können. Die im Rahmen der Verarbeitung entsprechender Kunststoffpartikel unter Ausbildung des Partikelschaumbauteils erfolgende Verbindung der Kunststoffpartikel geht typischerweise nicht mit einem entsprechenden (weiteren) Expansionsvorgang der Kunststoffpartikel einher.

Konkret kann es sich bei entsprechenden Kunststoffpartikeln z. B. um Kunststoffpartikel aus einem Kunststoffpartikelmaterial auf Basis von Polyolefinen, d. h. insbesondere Polypropylen, auf Basis von thermoplastischen Elastomeren, d. h. insbesondere thermoplastischem Polyurethan, oder auf Basis von Polystyrol handeln.

Die vermittels des Formwerkzeugs 1 verarbeitbaren Kunststoffpartikel sind vor ihrer Verarbeitung typischerweise nicht miteinander verbunden; die vermittels des Formwerkzeugs 1 verarbeitbaren Kunststoffpartikel liegen vor ihrer Verarbeitung sonach typischerweise als lose Partikel, d. h. z. B. als partikuläre Schüttung, vor und werden entsprechend über wenigstens eine Befülleinrichtung 2, 3, 4 des Formwerkzeugs 1 als lose Partikel in das Formwerkzeug 1 eingebracht.

Das Formwerkzeug 1 ist in den Fig. mehrteilig ausgeführt und umfasst beispielhaft zwei, gegebenenfalls auch als Formwerkzeughälften zu bezeichnende bzw. zu erachtende, Formwerkzeugkörper 5, 6. Der in den Fig. linke Formwerkzeugkörper 5 weist jedenfalls in einer geschnittenen Ansicht beispielhaft eine U-förmige geometrisch-konstruktive Gestalt, der in den Fig. rechte Formwerkzeugkörper 6 weist jedenfalls in einer geschnittenen Ansicht beispielhaft eine plattenförmige geometrisch-konstruktive Gestalt auf. Die Formwerkzeugkörper 5, 6 sind typischerweise zwischen einer Offen- und der in den Fig. gezeigten Schließstellung relativ zu einander bewegbar gelagert.

Das Formwerkzeug 1 bzw. die Formwerkzeugkörper 5, 6 umfasst bzw. umfassen nicht näher bezeichnete Formwerkzeug(körper)wandungen, welche die Formwerkzeugkavität 7 des Formwerkzeugs 1 begrenzen bzw. definieren.

Die Formwerkzeugkörper 5, 6 sind jeweils mit einer Vielzahl an, insbesondere bohrungsartigen bzw. -förmigen oder düsenartigen bzw. -förmigen, Öffnungen 8 versehen. Über die Öffnungen 8 - diese können konkret z. B. schlitzartig bzw. -förmig ausgeführt sein - kann z. B. ein Prozessfluid, wie z. B. Dampf bzw. Heißdampf, in die Formwerkzeugkavität 7 eingebracht werden. Alternativ oder ergänzend kann über entsprechende Öffnungen 8 ein bestimmtes Druckniveau, wie z. B. ein Über- oder Unterdruck, in der Formwerkzeugkavität 7 erzeugt oder aufrechterhalten werden.

Die Formwerkzeugkavität 7, d. h. insbesondere bestimmte Teilvolumina TV1 - TV3 der Formwerkzeugkavität 7 - ist über die bereits erwähnten Befülleinrichtungen 2 - 4 sukzessive mit vermittels des Formwerkzeugs 1 zu verarbeitenden Kunststoffpartikeln aus sich in wenigstens einem chemischen Parameter und/oder physikalischen Parameter unterscheidenden Kunststoffpartikelmaterialien befüllbar. Dem Formwerkzeug 1 sind mehrere Befülleinrichtungen 2 - 4 zugeordnet, über welche Kunststoffpartikel aus sich in wenigstens einem chemischen Parameter und/oder physikalischen Parameter unterscheidenden Kunststoffpartikelmaterialien in die Formwerkzeugkavität 7 einfüllen lassen. In dem in den Fig. 1 - 6 gezeigten Ausführungsbeispiel können über eine erste Befülleinrichtung 2 Kunststoffpartikel aus einem ersten Kunststoffpartikelmaterial in die Formwerkzeugkavität 7 einfüllbar sein bzw. eingefüllt werden, und über eine zweite Befülleinrichtung 3 weitere Kunststoffpartikel aus einem sich in wenigstens einem chemischen Parameter und/oder physikalischen Parameter von dem ersten Kunststoffpartikelmaterial unterscheidenden weiteren bzw. zweiten Kunststoffpartikelmaterial in die Formwerkzeugkavität 7 einfüllbar sein bzw. eingefüllt werden.

Die Befülleinrichtungen 2 - 4 können eingerichtet sein, eine, insbesondere druckbeaufschlagte, Förderströmung zu erzeugen, vermittels welcher die in die Formwerkzeugkavität 7 einzufüllenden Kunststoffpartikel in die Formwerkzeugkavität 7 gefördert werden können. Die Befülleinrichtungen 2 - 4 können hierfür eine Strömungserzeugungseinrichtung 2.1, 3.1, 4.1 zur Erzeugung einer entsprechenden Förderströmung und ein eine in die Formwerkzeugkavität 7 mündende Förderstrecke begrenzendes bzw. definierendes, insbesondere rohrartiges bzw. - förmiges, Förderelement 2.2, 3.2, 4.2 umfassen. Andersartig konfigurierte Befülleinrichtungen 2 - 4 sind denkbar. Lediglich beispielhaft sei in diesem Zusammenhang auf Befülleinrichtungen 2 - 4 verwiesen, welche eine (weitgehend) drucklose Förderung von Kunststoffpartikeln und damit eine (weitgehend) drucklose Befüllung der Formwerkzeugkavität 7 ermöglichen.

Das Formwerkzeug 1 umfasst ein schieberartiges oder -förmiges Formwerkzeugelement 9.

Eine erste Funktionalität des Formwerkzeugelements 9 besteht darin, wenigstens ein Teilvolumen der Formwerkzeugkavität 7 einzunehmen und bedarfsweise freizugeben. Hierfür lässt sich das Formwerkzeugelement 9 in eine in Fig. 1 strichliert dargestellte erste Ausrichtung und/oder Position und in eine in Fig. 1 dargestellte weitere bzw. zweite Ausrichtung und/oder Position bewegen. Das Formwerkzeugelement 9 ist sonach zwischen einer ersten Ausrichtung und/oder Position und wenigstens einer von der ersten Ausrichtung und/oder Position verschiedenen weiteren bzw. zweiten Ausrichtung und/oder Position bewegbar gelagert. Das Formwerkzeugelement 9 ist hierfür - wie rein schematisch durch den Doppelpfeil P1 angedeutet - in wenigstens einem translatorischen und/oder rotatorischen Bewegungsfreiheitsgrad bewegbar gelagert und entsprechend durch Bewegungen entlang wenigstens einer translatorischen und/oder rotatorischen Bewegungsbahn - dabei sind auch kombinierte Bewegungsbahnen in wenigstens zwei verschiedenen Bewegungsfreiheitsgraden denkbar - in die erste Ausrichtung und/oder Position und in die weitere bzw. zweite Ausrichtung und/oder Position überführbar. Konkrete Beispiele für entsprechende Bewegungsfreiheitsgrade bzw. Bewegungsbahnen sind, wie in dem Ausführungsbeispiel gemäß den Fig. 1 - 6 beispielhaft gezeigt, lineare Bewegungsfreiheitsgrade bzw. Bewegungsbahnen entlang einer lineare Bewegungsachse.

Hinsichtlich der ersten Ausrichtung und/oder Position des Formwerkzeugelements 9 und der wenigstens einen weiteren bzw. zweiten Ausrichtung und/oder Position des Formwerkzeugelements 9 sind - unabhängig von der konkreten Art der Bewegung - verschiedene Varianten denkbar:
In einer in den Fig. 1 - 6 gezeigten ersten beispielhaften Variante ragt das Formwerkzeugelement 9 in der ersten Ausrichtung und/oder Position nicht in die Formwerkzeugkavität 7, wobei es in der weiteren bzw. zweiten Ausrichtung und/oder Position um ein gewisses Maß in die Formwerkzeugkavität 7 ragt. Das Formwerkzeugelement 9 ist in der weiteren bzw. zweiten Ausrichtung und/oder Position sonach im Vergleich zu der ersten Ausrichtung und/oder Position um eine bestimmte Wegstrecke in die Formwerkzeugkavität 7 bewegt. Die erste Ausrichtung und/oder Position des Formwerkzeugelements 9 ist daher mit einem eingefahrenen Zustand des Formwerkzeugelements 9 und die weitere bzw. zweite Ausrichtung und/oder Position des Formwerkzeugelements 9 mit einem ausgefahrenen Zustand des Formwerkzeugelements 9 korreliert. In der ersten Ausrichtung und/oder Position kann das Formwerkzeugelement 9, insbesondere mit einem der Formwerkzeugkavität 7 zugewandten freien Ende, sonach bündig mit einer die Formwerkzeugkavität 7 begrenzenden Formwerkzeug(körper)wandung abschließen. In der weiteren bzw. zweiten Ausrichtung und/oder Position kann das Formwerkzeugelement 9 im Vergleich zu der ersten Ausrichtung und/oder Position um ein gewisses Maß in die Formwerkzeugkavität 7 und damit auch über die entsprechende Formwerkzeug(körper)wandung in die Formwerkzeugkavität 7 ragen, sodass das Formwerkzeugelement 9 in der weiteren bzw. zweiten Ausrichtung und/oder Position ein Teilvolumen der Formwerkzeugkavität 7 einnimmt.

In einer in den Fig. 1 - 6 nicht gezeigten zweiten beispielhaften Variante kann das Formwerkzeugelement 9 in der ersten Ausrichtung und/oder Position um ein erstes Maß in die Formwerkzeugkavität 7 ragen, wobei es in der weiteren bzw. zweiten Ausrichtung und/oder Position um ein von dem ersten Maß verschiedenes weiteres Maß in die Formwerkzeugkavität 7 ragt. Das Formwerkzeugelement 9 ist in der ersten Ausrichtung und/oder Position sonach um eine bestimmte erste Wegstrecke in die Formwerkzeugkavität 7 bewegt und in der weiteren bzw. zweiten Ausrichtung und/oder Position im Vergleich zu der ersten Ausrichtung und/oder Position um eine bestimmte weitere Wegstrecke in die Formwerkzeugkavität 7 bewegt. Die erste Ausrichtung und/oder Position des Formwerkzeugelements 9 kann auch hier mit einem (weiter) eingefahrenen Zustand des Formwerkzeugelements 9 und die weitere bzw. zweite Ausrichtung und/oder Position des Formwerkzeugelements 9 mit einem (weiter) ausgefahrenen Zustand des Formwerkzeugelements 7 korreliert sein. In der ersten Ausrichtung und/oder Position kann das Formwerkzeugelement 9, insbesondere mit einem der Formwerkzeugkavität 7 zugewandten freien Ende, um ein erstes Maß in die Formwerkzeugkavität 7 und damit auch um ein erstes Maß über eine Formwerkzeug(körper)wandung in die Formwerkzeugkavität 7 ragen, sodass das Formwerkzeugelement 9 in der ersten Ausrichtung und/oder Position ein erstes Teilvolumen der Formwerkzeugkavität 7 einnimmt. In der weiteren bzw. zweiten Ausrichtung und/oder Position kann das Formwerkzeugelement 9 im Vergleich zu der ersten Ausrichtung und/oder Position um ein weiteres bzw. zweites Maß in die Formwerkzeugkavität 7 und damit auch um ein weiteres Maß über die entsprechende Formwerkzeug(körper)wandung in die Formwerkzeugkavität 7 ragen, sodass das Formwerkzeugelement 9 in der weiteren bzw. zweiten Ausrichtung und/oder Position ein weiteres Teilvolumen der Formwerkzeugkavität 7 einnimmt.

Zur Überführung des Formwerkzeugelements 9 in jeweilige Ausrichtungen und/oder Positionen ist dem Formwerkzeugelement 9 eine Antriebseinrichtung 10 zugeordnet. Die Antriebseinrichtung 10 ist zur Erzeugung einer Antriebskraft und/oder eines Antriebsmoments eingerichtet, vermittels welche(r) sich das Formwerkzeugelement 9 in jeweilige Ausrichtungen und/oder Positionen bewegen lässt. Bei der Antriebseinrichtung 10 kann es sich z. B. um eine hydraulische oder pneumatische Antriebseinrichtung handeln. Die Antriebseinrichtung 10 kann sonach wenigstens ein hydraulisches oder pneumatisches Antriebselement (nicht gezeigt) umfassen, welches mit dem Formwerkzeugelement 9 koppelbar oder gekoppelt ist. Alternativ oder ergänzend kann es sich bei der Antriebseinrichtung 10 um eine (elektro)motorische Antriebseinrichtung handeln. Eine entsprechende Antriebseinrichtung kann wenigstens ein (elektro)motorisches Antriebselement umfassen, welches mit dem Formwerkzeugelement 9 koppelbar oder gekoppelt ist.

Eine zweite Funktionalität des Formwerkzeugelements 9 besteht darin, im Betrieb des Formwerkzeugs 1 bedarfsweise ein Prozessfluid, wie z. B. Dampf bzw. Heißdampf, in die Formwerkzeugkavität 7 einzubringen. Hierfür ist das Formwerkzeugelement 9 mit einer einen sich innerhalb des Formwerkzeugelements 9 erstreckenden, von einem Prozessfluid durchströmbaren Strömungskanal 11.1 aufweisenden Strömungskanalstruktur 11 ausgebildet oder umfasst eine solche. Ein entsprechender Strömungskanal 11.1 erstreckt sich sonach in wenigstens einer Raumrichtung und/oder Raumebene zwischen einer Einströmöffnung 11.2, über welche ein Prozessfluid in den Strömungskanal 11.1 bzw. in die Strömungskanalstruktur 11 einströmbar ist, und wenigstens einer Ausströmöffnung 11.3, über welche ein Prozessfluid aus dem Strömungskanal 11.1 bzw. aus der Strömungskanalstruktur 11 in die Formwerkzeugkavität 7 ausströmbar ist, durch das Formwerkzeugelement 9.

Das Formwerkzeugelement 9 ist sonach mit einer oder - wie in den Fig. 1 - 6 gezeigt - mehreren, insbesondere düsenartigen oder -förmigen, Ausströmöffnungen 11.3, über welche ein durch den Strömungskanal 11.1 oder die Strömungskanalstruktur 11 strömendes Prozessfluid aus dem Formwerkzeugelement 9 in die Formwerkzeugkavität 7 ausströmbar ist, ausgebildet oder umfasst solche.

Insbesondere ist es möglich, dass das Formwerkzeugelement 9 mit einer Vielzahl sich über den kompletten Querschnitt erstreckend angeordneten oder ausgebildeten Ausströmöffnungen 11.3 versehen ist, sodass ein Ausströmen eines Prozessfluids über den gesamten Querschnitt des Formwerkzeugelements 9 möglich ist. Denkbar ist es ebenso, dass verschiedene Ausströmbereiche definiert sind, über welche abhängig oder unabhängig voneinander ein Prozessfluid ausströmbar ist. Dies kann z. B. dadurch realisiert sein, dass einer ersten Anzahl an Ausströmöffnungen 11.3 - diese können z. B. ein erstes Array an Ausströmöffnungen 11.3 bilden - ein erster Strömungskanal 11.1 zugeordnet ist, sodass ein durch den ersten Strömungskanal 11.1 strömendes erstes Prozessfluid über die erste Anzahl an Ausströmöffnungen 11.3 in die Formwerkzeugkavität 7 ausströmbar ist, und wenigstens einer weiteren Anzahl an Ausströmöffnungen 11.3 - diese können z. B. ein weiteres Array an Ausströmöffnungen 11.3 bilden - wenigstens ein weiterer Strömungskanal 11.n zugeordnet ist, sodass ein durch den wenigstens einen weiteren Strömungskanal 11.n strömendes weiteres Prozessfluid über die weitere Anzahl an Ausströmöffnungen 11.3 in die Formwerkzeugkavität 7 ausströmbar ist. Ein entsprechendes erstes Prozessfluid kann sich von einem entsprechenden weiteren Prozessfluid in wenigstens einem chemischen Parameter, wie z. B. der chemischen Zusammensetzung, und/oder physikalischen Parameter, wie z. B. dem Druck, der Temperatur, etc., unterscheiden.

Die Strömungskanalstruktur 11 kann - wie in den Fig. 1 - 6 schematisch angedeutet - eine durch mehrere gitterartig oder -förmig angeordnete oder ausgebildete Strukturelemente (nicht bezeichnet) umfassende Gitterstruktur umfassen. Entsprechende Strukturelemente können z. B. strebenartig- bzw. förmig ausgebildet sein. Die Gitterstruktur kann mehrere miteinander kommunizierende Teilräume definieren. Die Gitterstruktur kann sich in wenigstens einer Raumebene und/oder Raumrichtung durch das Formwerkzeugelement 9 erstreckend ausgebildet sein und nimmt daher typischerweise ein bestimmtes Raumvolumen des Formwerkzeugelements 9 ein. Die Gitterstruktur kann insbesondere im Bereich eines der Formwerkzeugkavität 7 zugewandten freien Endes des Formwerkzeugelements 9 angeordnet oder ausgebildet sein und kann mit, insbesondere im Bereich eines der Formwerkzeugkavität 7 zugewandten freien Endes, angeordneten oder ausgebildeten Ausströmöffnungen 11.3 kommunizieren. Die Gitterstruktur kann sich zumindest abschnittsweise, insbesondere vollständig, über den Querschnitt des Formwerkzeugelements 9 erstreckend angeordnet oder ausgebildet sein und damit als Verteilerstruktur zur Verteilung eines durch das Formwerkzeugelement 9 strömenden Prozessfluids über den Querschnitt des Formwerkzeugelements 9 dienen. Die Gitterstruktur kann insbesondere in einem additiven Fertigungsverfahren ausgebildet bzw. gefertigt sein.

Die Strömungskanalstruktur 11 kann mit einer eigenen, insbesondere von einer Prozessfluidversorgungseinrichtung 12 der Formwerkzeugkavität 7 - hierbei kann es sich z. B. um eine Dampfkammer handeln - unabhängig betreibbaren, Prozessfluidversorgungseinrichtung 13 verbindbar oder verbunden sein. Das über das Formwerkzeugelement 9 in die Formwerkzeugkavität 7 einströmbare Prozessfluid - hierbei kann es sich z. B. um Dampf bzw. Heißdampf handeln - kann sonach unabhängig von dem oder einem über jeweilige formwerkzeug(körper)wandungsseitige Öffnungen 8 in die Formwerkzeugkavität 7 einströmenden Prozessfluid bereitgestellt und bedarfsweise in die Formwerkzeugkavität 7 eingebracht werden.

Das Formwerkzeugelement kann - wie in den Fig. 1, 2 gezeigt - einen Aufnahmebereich 14 zur Aufnahme eines in die Formwerkzeugkavität ragenden freien Endes einer Befülleinrichtung 3 zur Befüllung der Formwerkzeugkavität 7 mit Kunststoffpartikeln aus einem sich von einem ersten Kunststoffpartikelmaterial in wenigstens einem chemischen Parameter und/oder physikalischen Parameter unterscheidenden weiteren bzw. zweiten Kunststoffpartikelmaterial, aufweisen. Der Aufnahmebereich 14 kann z. B. durch eine Aussparung oder Vertiefung in dem Formwerkzeugelement 9, d. h. insbesondere in einem der Formwerkzeugkavität 7 zugewandten freien Ende des Formwerkzeugelements 9, ausgebildet sein. Der Aufnahmebereich 14 ist eingerichtet, mit einem in die Formwerkzeugkavität 7 ragenden freien Ende eines rohrartigen bzw. -förmigen Förderelements 3.2 der Befülleinrichtung 3, derart zusammenwirken, dass das typischerweise mit wenigstens einer Öffnung zum Ausströmen von Kunststoffpartikeln versehene freie Ende des Förderelements 3.2 dichtend in den Aufnahmebereich 14 eintaucht, mithin das Formwerkzeugelement 9 die wenigstens eine Öffnung zumindest abschnittsweise dichtend umschließt. Dieses Zusammenwirken ist - wie in den Fig. 1, 2 gezeigt - insbesondere realisiert, wenn das Formwerkzeugelement 9 in die weitere bzw. zweite Ausrichtung und/oder Position bewegt ist. Gleiches könnte durch ein dichtendes Anliegen des Förderelements 3.2 an einen Formwerkzeugelement 9 realisiert sein.

Anhand der Fig. 1 - 6 ist ferner eine dem Formwerkzeug 1 übergeordnete Vorrichtung 16 zur Herstellung von zweikomponentigen Partikelschaumbauteilen ersichtlich. Die Vorrichtung 1 umfasst neben dem Formwerkzeug 1 auch die Befülleinrichtungen 2 - 4, die Antriebseinrichtung 10 sowie die Porzessfluidversorgungseinrichtungen 12 und 13.

Der Betrieb des Formwerkzeugs 1 zur Herstellung eines zweikomponentigen Partikelschaumbauteils wird nachfolgend unter Bezugnahme auf die Fig. 1 - 6 näher erläutert.

Dem Formwerkzeug 1 ist eine hardware- und/oder softwaremäßig implementierte Steuerungseinrichtung 15 zugeordnet, welche zur Steuerung des Betriebs des Formwerkzeugs 1 bzw. der das Formwerkzeug 1 umfassenden Vorrichtung 16 eingerichtet ist.

Die Steuerungseinrichtung 15 ist zur Steuerung von Bewegungen des Formwerkzeugelements 9 von der ersten Ausrichtung und/oder Position in die wenigstens eine weitere bzw. eine zweite Ausrichtung und/oder Position, und umgekehrt, eingerichtet. Die Steuerungseinrichtung 15 ist insbesondere eingerichtet, Steuerungsinformationen zur Steuerung des Betriebs der dem Formwerkzeugelement 9 zugeordneten Antriebseinrichtung 10 zu erzeugen, um das Formwerkzeugelement 9 in die weitere bzw. zweite Ausrichtung und/oder Position zu bewegen. Die Antriebseinrichtung 10 kann entsprechend auf Grundlage der Steuerungsinformationen betrieben sein bzw. werden. Die Steuerungseinrichtung 15 kann - wie in Fig. 1 gezeigt - insbesondere eingerichtet sein, das Formwerkzeugelement 9 vor Befüllen der Formwerkzeugkavität 7 mit Kunststoffpartikeln aus einem ersten Kunststoffpartikelmaterial in die weitere bzw. zweite Ausrichtung und/oder Position zu bewegen. Dies erfolgt derart, dass durch die Formwerkzeug(körper)wandungen und das in die weitere bzw. zweite Ausrichtung und/oder Position bewegte Formwerkzeugelement 9 ein über die erste Befülleinrichtung 2 mit Kunststoffpartikeln aus einem ersten Kunststoffpartikelmaterial befüllbares erstes Teilvolumen TV1 der Formwerkzeugkavität 7 begrenzt bzw. definiert ist. Das mit Kunststoffpartikeln aus dem ersten Kunststoffpartikelmaterial befüllbare erste Teilvolumen TV1 der Formwerkzeugkavität 7 ist gegenüber dem mit Kunststoffpartikelmaterial befüllbaren Volumen der Formwerkzeugkavität in der ersten Ausrichtung und/oder Position des Formwerkzeugelements um ein erstes Maß reduziert.

Die Steuerungseinrichtung 15 kann ferner zur Steuerung von Befüllvorgängen des ersten Teilvolumens TV1 der Formwerkzeugkavität 1 mit Kunststoffpartikeln aus einem ersten Kunststoffpartikelmaterial eingerichtet sein. Die Steuerungseinrichtung 15 ist insbesondere eingerichtet, Steuerungsinformationen zur Steuerung des Betriebs der ersten Befülleinrichtung 2 zur Befüllung des ersten Teilvolumens TV1 der Formwerkzeugkavität 7 mit Kunststoffpartikeln aus einem ersten Kunststoffpartikelmaterial zu erzeugen, um das erste Teilvolumen TV1 der Formwerkzeugkavität mit Kunststoffpartikeln aus dem ersten Kunststoffpartikelmaterial zu befüllen. Die erste Befülleinrichtung 2 kann entsprechend auf Grundlage der Steuerungsinformationen betrieben sein bzw. werden. Die Steuerungseinrichtung 15 kann insbesondere eingerichtet sein, einen Befüllvorgang des ersten Teilvolumens TV1 der Formwerkzeugkavität 7 mit Kunststoffpartikeln aus einem ersten Kunststoffpartikelmaterial über die erste Befülleinrichtung 2 durchzuführen, wenn das Formwerkzeugelement 9 - wie in Fig. 1 gezeigt - in die weitere bzw. zweite Ausrichtung und/oder Position bewegt ist.

Die Steuerungseinrichtung 15 kann - wie in den Fig. 2 gezeigt - ferner zur Steuerung von Maßnahmen zum Verbinden der in die Formwerkzeugkavität 7 eingefüllten Kunststoffpartikel aus dem ersten Kunststoffpartikelmaterial eingerichtet sein. Die Steuerungseinrichtung 15 kann insbesondere eingerichtet sein, wenigstens eine Maßnahme zum Verbinden der in das erste Teilvolumen TV1 der Formwerkzeugkavität 7 eingefüllten Kunststoffpartikel aus dem ersten Kunststoffpartikelmaterial unter Ausbildung eines aus dem ersten Kunststoffpartikelmaterial gebildeten ersten Formteils FT1 durchzuführen, wenn das erste Teilvolumen TV1 der Formwerkzeugkavität 7 mit Kunststoffpartikeln aus dem ersten Kunststoffpartikelmaterial befüllt ist. Die Durchführung der Maßnahme zum Verbinden der Kunststoffpartikel aus dem ersten Kunststoffpartikelmaterial resultiert sonach in der Ausbildung eines aus dem ersten Kunststoffpartikelmaterial bestehenden ersten Formteils, welches das erste Teilvolumen TV1 der Formwerkzeugkavität 7 einnimmt.

Die Maßnahme zum Verbinden der in das erste TV1 der Formwerkzeugkavität 7 eingefüllten Kunststoffpartikeln aus dem ersten Kunststoffpartikelmaterial kann - wie in Fig. 2 durch die geschwungenen Linien angedeutet - ein Einbringen eines temperierten Prozessfluids, insbesondere Dampf, in das erste Teilvolumen TV1 der Formwerkzeugkavität 7, insbesondere über die formwerkzeug(körper)wandungsseitigen Öffnungen 8 und/oder über die formwerkzeugelementseitigen Ausströmöffnungen 11.3, umfassen. Die Steuerungseinrichtung 15 kann sonach eingerichtet sein, das Einbringen wenigstens eines temperierten Prozessfluids in das erste Teilvolumen TV1 der Formwerkzeugkavität 7 zu steuern. Im Zusammenhang mit den formwerkzeug(körper)wandungsseitigen Öffnungen 8 kann das Prozessfluid über die Prozessfluidversorgungseinrichtung 12 bereitgestellt sein bzw. werden. Im Zusammenhang mit den formwerkzeugelementseitigen Ausströmöffnungen 11.3 kann das Prozessfluid über die Prozessfluidversorgungseinrichtung 13 (optional) bereitgestellt sein bzw. werden. Insbesondere es möglich, dass die Maßnahme durch Einbringen eines Prozessfluids nur über die formwerkzeug(körper)wandungsseitigen Öffnungen 8 erfolgt.

Die Erfassung des bzw. eines, gegebenenfalls z. B. im Hinblick auf die gewünschten Eigenschaften eines herzustellenden mehrkomponentigen Partikelschaumbauteils, ausreichenden Füllzustands des ersten Teilvolumens TV1 der Formwerkzeugkavität 7 mit Kunststoffpartikeln aus dem ersten Kunststoffpartikelmaterial kann über eine geeignete Erfassungseinrichtung (nicht gezeigt) zur Erfassung des Füllzustands der Formwerkzeugkavität 7, d. h. insbesondere des ersten Teilvolumens TV1 der Formwerkzeugkavität 7, realisiert werden. Eine entsprechende Erfassungseinrichtung kann ein oder mehrere Erfassungselemente, hierbei kann es sich z. B. um Drucksensoren handeln, umfassen, deren Erfassungsinformationen an die Steuerungseinrichtung 15 übertragen werden können.

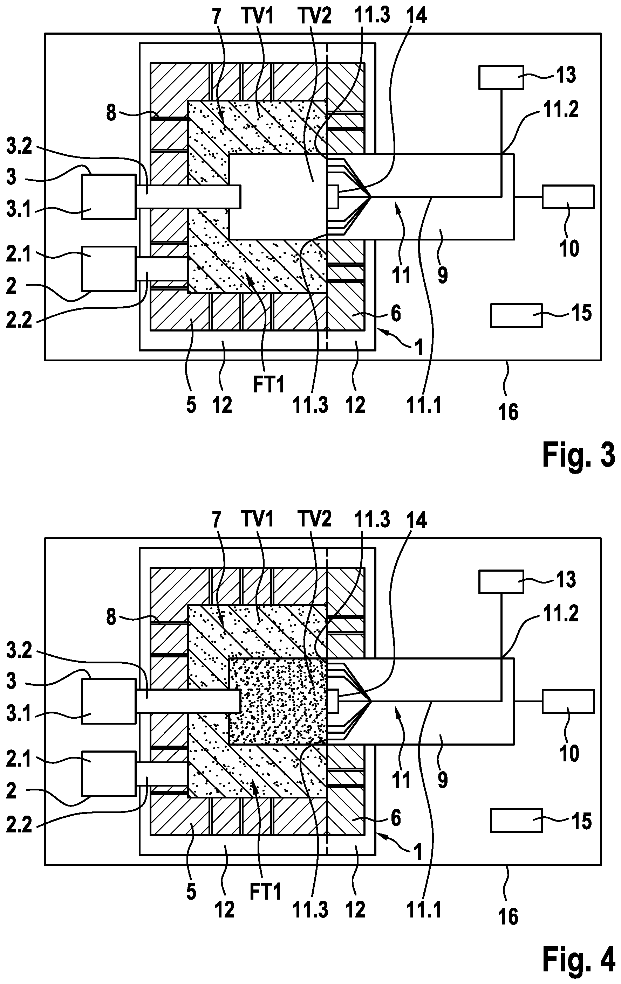

Die Steuerungseinrichtung 15 kann - wie in Fig. 3 gezeigt - ferner eingerichtet sein, das Formwerkzeugelement 9 von der weiteren bzw. zweiten Ausrichtung und/oder Position zurück in die erste Ausrichtung und/oder Position zu bewegen, wenn die Maßnahme zum Verbinden der Kunststoffpartikel aus dem ersten Kunststoffpartikelmaterial abgeschlossen ist. Die Steuerungseinrichtung 15 kann insbesondere eingerichtet sein, Steuerungsinformationen zur Steuerung des Betriebs der dem Formwerkzeugelement 9 zugeordneten Antriebseinrichtung 10 zu erzeugen, um das Formwerkzeugelement 9 von der weiteren bzw. zweiten Ausrichtung und/oder Position zurück in die erste Ausrichtung und/oder Position zu bewegen. Die Antriebseinrichtung 10 kann entsprechend auf Grundlage der Steuerungsinformationen betrieben sein bzw. werden. Dies erfolgt insbesondere derart, dass durch das erste Formteil FT1 und/oder die Formwerkzeug(körper)wandung und/oder das in die erste Ausrichtung und/oder Position bewegte Formwerkzeugelement 9 ein mit Kunststoffpartikel aus einem weiteren bzw. zweiten Kunststoffpartikelmaterial befüllbares zweites Teilvolumen TV2 der Formwerkzeugkavität 7 begrenzt bzw. definiert ist.

Die Erfassung des Abschlusses der Maßnahme zum Verbinden der Kunststoffpartikel aus dem ersten Kunststoffpartikelmaterial kann über eine geeignete Erfassungseinrichtung (nicht gezeigt) zur Erfassung des Abschlusses der Maßnahme zum Verbinden der Kunststoffpartikel aus dem ersten Kunststoffpartikelmaterial, realisiert sein bzw. werden. Eine entsprechende Erfassungseinrichtung kann ein oder mehrere Erfassungselemente, hierbei kann es sich z. B. um Drucksensoren handeln, umfassen, deren Erfassungsinformationen an die Steuerungseinrichtung 15 übertragen werden können.

Die Steuerungseinrichtung 15 kann - wie in Fig. 4 gezeigt - eingerichtet sein, einen Befüllvorgang des zweiten Teilvolumens TV2 der Formwerkzeugkavität 7 mit Kunststoffpartikeln aus einem sich von dem ersten Kunststoffpartikelmaterial in wenigstens einem chemischen Parameter und/oder physikalischen Parameter unterscheidenden weiteren bzw. zweiten Kunststoffpartikelmaterial über die zweite Befülleinrichtung 3 zur Befüllung der Formwerkzeugkavität 7 mit Kunststoffpartikeln aus einem sich von dem ersten Kunststoffpartikelmaterial in wenigstens einem chemischen Parameter und/oder physikalischen Parameter unterscheidenden weiteren bzw. zweiten Kunststoffpartikelmaterial, durchzuführen, wenn das Formwerkzeugelement 9 - wie in Fig. 4 gezeigt - in die erste Ausrichtung und/oder Position bewegt ist. Die Steuerungseinrichtung 15 ist insbesondere eingerichtet, Steuerungsinformationen zur Steuerung des Betriebs der zweiten Befülleinrichtung 3 zu erzeugen, um das zweite Teilvolumen 7 der Formwerkzeugkavität 7 mit Kunststoffpartikeln aus dem zweiten Kunststoffpartikelmaterial zu befüllen. Die zweite Befülleinrichtung 3 kann entsprechend auf Grundlage der Steuerungsinformationen betrieben sein bzw. werden. Die zweite Befülleinrichtung 3 kann entsprechend auf Grundlage der Steuerungsinformationen betrieben sein bzw. werden.

Die Erfassung der Bewegung des Formwerkzeugelements 9 in die erste Ausrichtung und/oder Position kann über eine geeignete Erfassungseinrichtung (nicht gezeigt) zur Erfassung von Bewegungen des Formwerkzeugelements 9 in die erste Ausrichtung und/oder Position realisiert sein bzw. werden. Eine entsprechende Erfassungseinrichtung kann ein oder mehrere Erfassungselemente, hierbei kann es sich z. B. um Wegsensoren handeln, umfassen, deren Erfassungsinformationen an die Steuerungseinrichtung übertragen werden können.

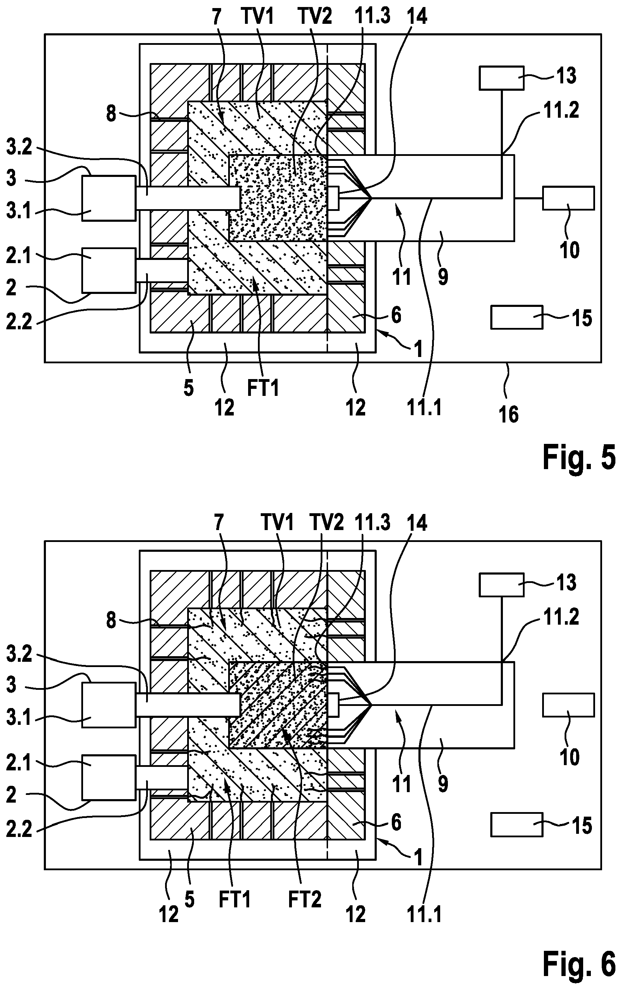

Die Steuerungseinrichtung 15 kann - wie in Fig. 5 gezeigt - eingerichtet sein, wenigstens eine Maßnahme zum Verbinden der in das zweite Teilvolumen TV2 der Formwerkzeugkavität 7 eingefüllten Kunststoffpartikel aus dem weiteren bzw. zweiten Kunststoffpartikelmaterial unter Ausbildung eines aus dem weiteren bzw. zweiten Kunststoffpartikelmaterial gebildeten zweiten Formteils FT2 durchzuführen, wenn das zweite Teilvolumen TV2 der Formwerkzeugkavität 7 mit Kunststoffpartikeln aus dem weiteren bzw. zweiten Kunststoffpartikelmaterial befüllt ist. Die Durchführung der Maßnahme zum Verbinden der Kunststoffpartikel aus dem weiteren bzw. zweiten Kunststoffpartikelmaterial resultiert sonach in der Ausbildung eines aus dem weiteren bzw. zweiten Kunststoffpartikelmaterial bestehenden zweiten Formteils FT2, welches das zweite Teilvolumen TV2 der Formwerkzeugkavität 7 einnimmt. Das zweite Formteil FT2 kann unter Ausbildung des herzustellenden mehrkomponentigen Partikelschaumbauteils insbesondere form-, und/oder kraft- und/oder stoffschlüssig mit dem ersten Formteil FT1 verbunden sein.

Die Maßnahme zum Verbinden von in das zweite Teilvolumen TV2 der Formwerkzeugkavität 7 eingefüllten Kunststoffpartikeln aus dem weiteren bzw. zweiten Kunststoffpartikelmaterial kann - wie in Fig. 5 durch die geschwungenen Linien angedeutet - ein Einbringen eines temperierten Prozessfluids in das weitere bzw. zweite Teilvolumen TV2 der Formwerkzeugkavität 7 über formwerkzeug(körper)wandungsseitige Öffnungen 8 und/oder formwerkzeugelementseitige Ausströmöffnungen 11.3, umfassen. Im Zusammenhang mit den formwerkzeug(körper)wandungsseitigen Öffnungen 8 kann das Prozessfluid über die Prozessfluidversorgungseinrichtung 12 bereitgestellt sein bzw. werden. Im Zusammenhang mit den formwerkzeugelementseitigen Ausströmöffnungen 11.3 kann das Prozessfluid über die Prozessfluidversorgungseinrichtung 13 bereitgestellt sein bzw. werden. Insbesondere es möglich, dass die Maßnahme durch Einbringen eines Prozessfluids nur über die formwerkzeugelementseitigen Ausströmöffnungen 11.3 erfolgt.

Die Erfassung des bzw. eines, gegebenenfalls z. B. im Hinblick auf die gewünschten Eigenschaften eines herzustellenden mehrkomponentigen Partikelschaumbauteils, ausreichenden Füllzustands des zweiten Teilvolumens TV2 der Formwerkzeugkavität 7 mit Kunststoffpartikeln aus dem weiteren bzw. zweiten Kunststoffpartikelmaterial kann über eine geeignete Erfassungseinrichtung (nicht gezeigt) zur Erfassung des Füllzustands der Formwerkzeugkavität, d. h. insbesondere des zweiten Teilvolumens TV2 der Formwerkzeugkavität, realisiert werden. Eine entsprechende Erfassungseinrichtung kann ein oder mehrere Erfassungselemente, hierbei kann es sich z. B. um Drucksensoren handeln, umfassen, deren Erfassungsinformationen an die Steuerungseinrichtung 15 übertragen werden können.

Die Steuerungseinrichtung 15 kann - wie in Fig. 6 gezeigt - ferner zur Steuerung von Maßnahmen zum Evakuieren und/oder Kühlen der Formwerkzeugkavität 7 zugeordnet sein. Die Steuerungseinrichtung 7 kann eingerichtet sein, eine Maßnahme zum Evakuieren und/oder Kühlen der Formwerkzeugkavität 7 über eine nicht näher gezeugte Einrichtung zum Evakuieren und/oder Kühlen der Formwerkzeugkavität 7 durchzuführen, wenn die Maßnahme zum Verbinden der in die Formwerkzeugkavität 7 eingefüllten Kunststoffpartikel aus dem weitern bzw. zweiten Kunststoffpartikelmaterial abgeschlossen ist. Das Evakuieren und/oder Kühlen der Formwerkzeugkavität 7 kann - wie in Fig. 6 durch die geschwungenen Linien angedeutet - z. B. über einzelne, mehrere oder sämtliche formwerkzeug(körper)wandungsseitige Öffnungen 8 und/oder formwerkzeugelementseitige Ausströmöffnungen 11.3 erfolgen.

Die Erfassung des Abschlusses der Maßnahme zum Verbinden der Kunststoffpartikel aus dem weiteren bzw. zweiten Kunststoffpartikelmaterial kann über eine geeignete Erfassungseinrichtung (nicht gezeigt) zur Erfassung des Abschlusses der Maßnahme zum Verbinden der Kunststoffpartikel aus dem weiteren bzw. zweiten Kunststoffpartikelmaterial, realisiert sein bzw. werden. Eine entsprechende Erfassungseinrichtung kann ein oder mehrere Erfassungselemente, hierbei kann es sich z. B. um Drucksensoren handeln, umfassen, deren Erfassungsinformationen an die Steuerungseinrichtung 15 übertragen werden können.

Schließlich kann ein Entnehmen des mehrkomponentigen Partikelschaumbauteils aus der Formwerkzeugkavität 7 erfolgen.

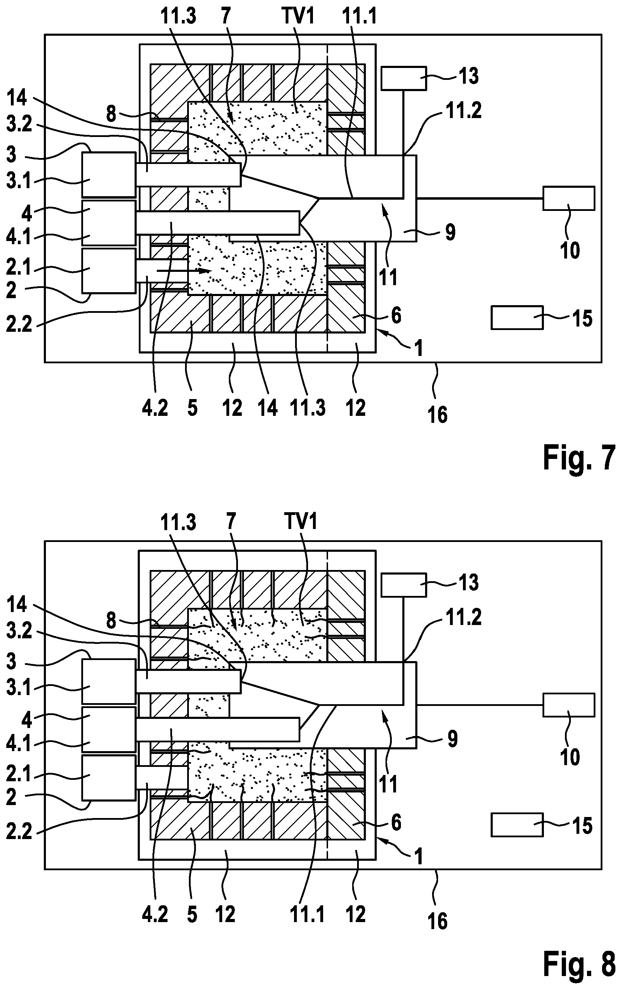

Der Betrieb des Formwerkzeugs 1 zur Herstellung eines dreikomponentigen Partikelschaumbauteils wird nachfolgend unter Bezugnahme auf das in den Fig. 7 - 15 gezeigte Ausführungsbeispiel näher erläutert.

Ersichtlich weist das Formwerkzeug 1 hier im Vergleich zu dem in den Fig. 1 - 6 gezeigten Formwerkzeug 1 drei Befülleinrichtungen 2 - 4 auf, über welche sich jeweils Kunststoffpartikel aus einem bestimmten Kunststoffpartikelmaterial in die Formwerkzeugkavität 7 einfüllen lassen.

Die in den Fig. 7, 8 gezeigten Zustände entsprechen den in den Fig. 1, 2 gezeigten Zuständen, d. h. es wird ein erstes Teilvolumen TV1 der Formwerkzeugkavität 7 durch Bewegen des Formwerkzeugelements 9 in die zweite Ausrichtung und/oder Position begrenzt bzw. definiert, das erste Teilvolumen TV1 der Formwerkzeugkavität 7 über die erste Befülleinrichtung 2 mit Kunststoffpartikeln aus einem ersten Kunststoffpartikelmaterial befüllt und eine Maßnahme zum Verbinden der Kunststoffpartikel aus dem ersten Kunststoffpartikelmaterial unter Ausbildung eines ersten Formteils FT1 durchgeführt.

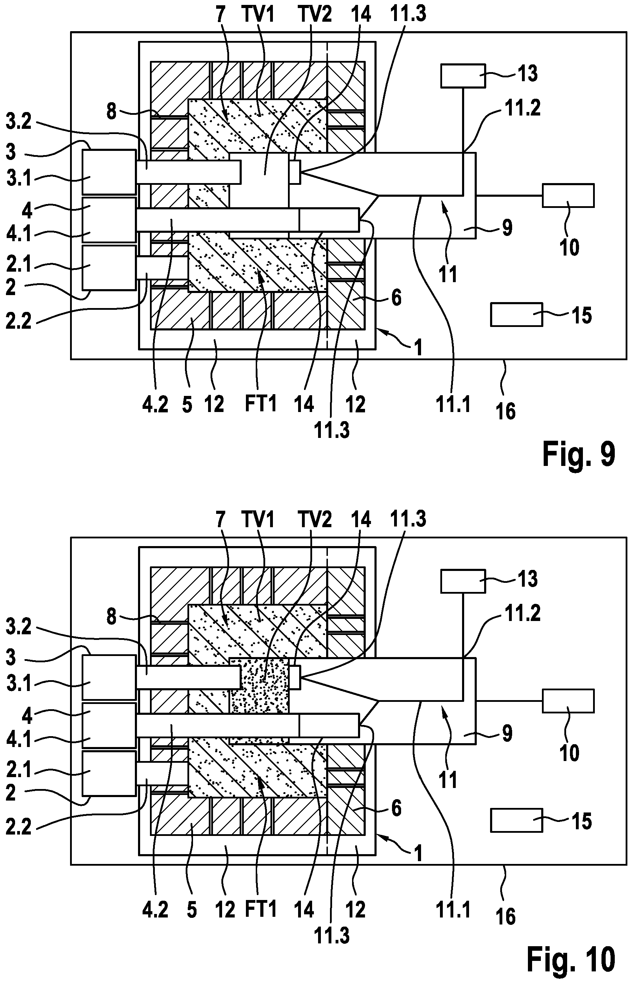

Die Steuerungseinrichtung 15 ist - wie in Fig. 9 gezeigt - jedoch im Vergleich zu dem in den Fig. 1 - 6 gezeigten Ausführungsbeispiel zusätzlich eingerichtet, das Formwerkzeugelement 9 von der zweiten Ausrichtung und/oder Position in eine dritte Ausrichtung und/oder Position zu bewegen, wenn die wie weiter oben beschrieben erfolgende Maßnahme zum Verbinden der Kunststoffpartikel aus dem ersten Kunststoffpartikelmaterial abgeschlossen ist. Die Steuerungseinrichtung 15 ist insbesondere eingerichtet, Steuerungsinformationen zur Steuerung des Betriebs der Antriebseinrichtung 10 zu erzeugen, um das Formwerkzeugelement 9 in die dritte Ausrichtung und/oder Position zu bewegen. Die Antriebseinrichtung 10 kann entsprechend auf Grundlage der Steuerungsinformationen betrieben sein bzw. werden. Dies erfolgt insbesondere derart, dass durch das erste Formteil FT1 und/oder die Formwerkzeug(körper)wandung und/oder das wenigstens eine in die dritte Ausrichtung und/oder Position bewegte Formwerkzeugelement 9 ein über die zweite Befülleinrichtung 3 mit Kunststoffpartikeln aus einem zweiten Kunststoffpartikelmaterial befüllbares zweites Teilvolumen TV2 der Formwerkzeugkavität 7 begrenzt bzw. definiert ist.

Die Steuerungseinrichtung 15 ist - wie in Fig. 10 gezeigt - eingerichtet, einen Befüllvorgang des zweiten Teilvolumens TV2 der Formwerkzeugkavität 7 mit Kunststoffpartikeln aus einem sich von dem ersten Kunststoffpartikelmaterial in wenigstens einem chemischen Parameter und/oder physikalischen Parameter unterscheidenden zweiten Kunststoffpartikelmaterial über die zweite Befülleinrichtung 3 zur Befüllung des zweiten Teilvolumens TV2 der Formwerkzeugkavität 7 durchzuführen, wenn das Formwerkzeugelement 9 in die zweite Ausrichtung und/oder Position bewegt ist. Die Steuerungseinrichtung 15 ist insbesondere eingerichtet, Steuerungsinformationen zur Steuerung des Betriebs der zweiten Befülleinrichtung 3 zu erzeugen, um das zweite Teilvolumen TV2 der Formwerkzeugkavität 7 mit Kunststoffpartikeln aus dem zweiten Kunststoffpartikelmaterial zu befüllen. Die zweite Befülleinrichtung 3 kann entsprechend auf Grundlage der Steuerungsinformationen betrieben sein bzw. werden.

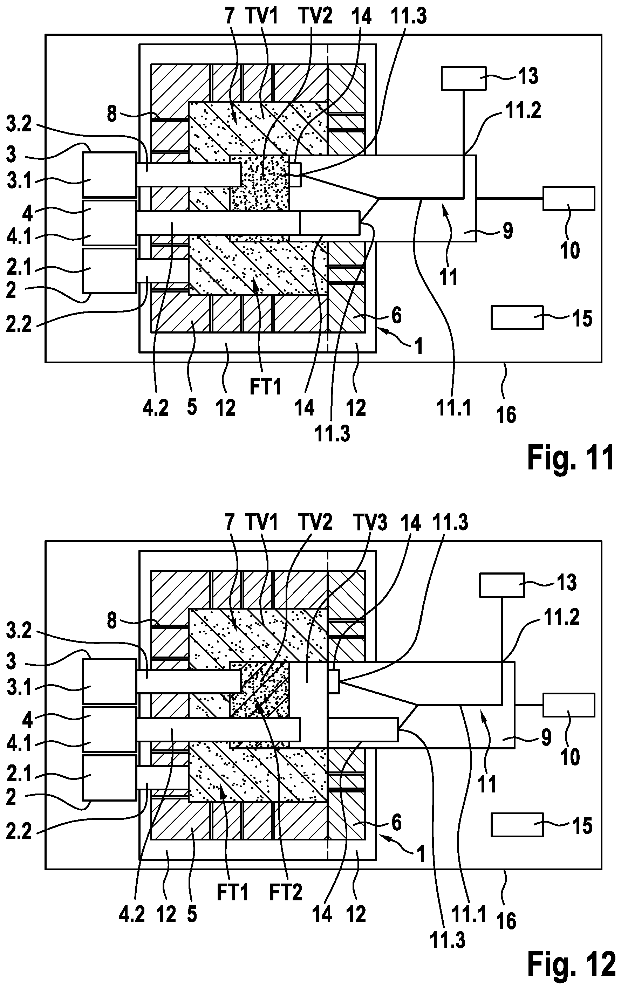

Die Steuerungseinrichtung 15 ist - wie in Fig. 11 gezeigt - eingerichtet, wenigstens eine Maßnahme zum Verbinden der in das zweite Teilvolumen TV2 der Formwerkzeugkavität 7 eingefüllten Kunststoffpartikel aus dem zweiten Kunststoffpartikelmaterial unter Ausbildung eines aus dem zweiten Kunststoffpartikelmaterial gebildeten zweiten Formteils FT2 durchzuführen, wenn das zweite Teilvolumen TV2 der Formwerkzeugkavität 7 mit Kunststoffpartikeln aus dem zweiten Kunststoffpartikelmaterial befüllt ist. Die Durchführung der Maßnahme zum Verbinden der Kunststoffpartikel aus dem zweiten Kunststoffpartikelmaterial resultiert sonach in der Ausbildung eines aus dem zweiten Kunststoffpartikelmaterial bestehenden zweiten Formteils FT2, welches ein Teilvolumen der Formwerkzeugkavität 7 einnimmt. Das zweite Formteil FT2 kann unter insbesondere form-, und/oder kraft- und/oder stoffschlüssig mit dem ersten Formteil FT1 verbunden sein.

Die Maßnahme zum Verbinden von in die Formwerkzeugkavität 7 eingefüllten Kunststoffpartikeln aus dem zweiten Kunststoffpartikelmaterial kann -wie in Fig. 11 durch die geschwungenen Linien angedeutet - ein Einbringen eines temperierten Prozessfluids in das zweite Teilvolumen TV2 der Formwerkzeugkavität 7 über formwerkzeug(körper)wandungsseitige Öffnungen 8 und/oder formwerkzeugelementseitige Ausströmöffnungen 11.3 umfassen. Insbesondere es möglich, dass die Maßnahme durch Einbringen eines Prozessfluids nur über die formwerkzeugelementseitigen Ausströmöffnungen 11.3 erfolgt.

Die Steuerungseinrichtung 15 ist - wie in Fig. 12 gezeigt - ferner eingerichtet, das Formwerkzeugelement 9 von der dritten Ausrichtung und/oder Position in die erste Ausrichtung und/oder Position zu bewegen, wenn die Maßnahme zum Verbinden der Kunststoffpartikel aus dem zweiten Kunststoffpartikelmaterial abgeschlossen ist. Die Steuerungseinrichtung 15 ist insbesondere eingerichtet, Steuerungsinformationen zur Steuerung der dem Formwerkzeugelement 9 zugeordneten Antriebseinrichtung 10 zu erzeugen, um das Formwerkzeugelement 9 von der dritten Ausrichtung und/oder Position in die erste Ausrichtung und/oder Position zu bewegen. Die Antriebseinrichtung 10 kann entsprechend auf Grundlage der Steuerungsinformationen betrieben sein bzw. werden. Dies erfolgt insbesondere derart, dass durch das erste Formteil FT1 und/oder das zweite Formteil FT2 und/oder die Formwerkzeug(körper)wandung und/oder das in die dritte Ausrichtung und/oder Position bewegte Formwerkzeugelement 9 ein mit Kunststoffpartikel aus einem dritten Kunststoffpartikelmaterial befüllbares drittes Teilvolumen TV3 der Formwerkzeugkavität 7 begrenzt bzw. definiert ist.

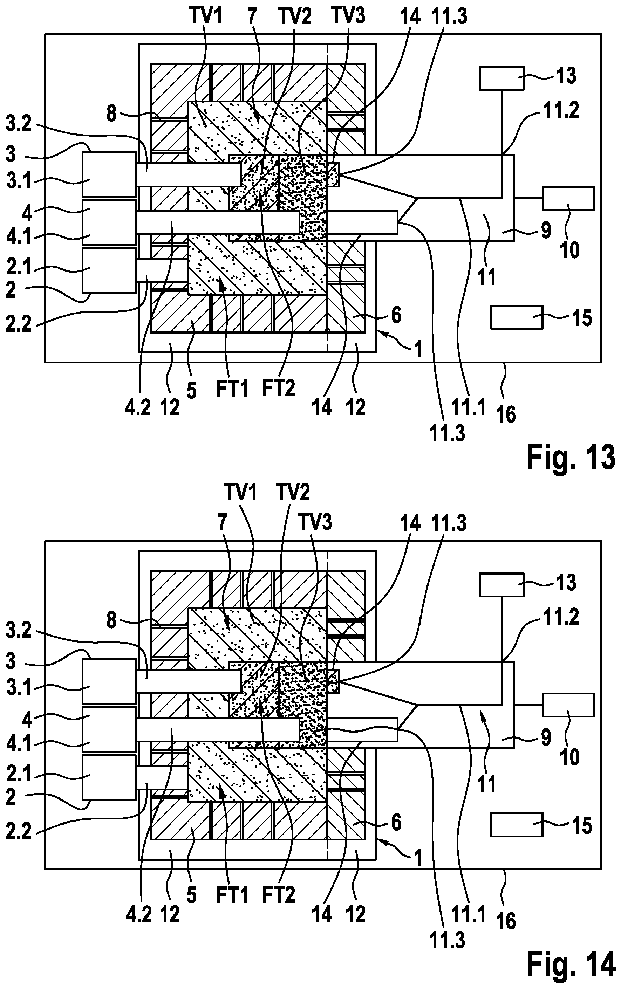

Die Steuerungseinrichtung 15 kann - wie in Fig. 13 gezeigt - eingerichtet sein, einen Befüllvorgang des dritten Teilvolumens TV3 der Formwerkzeugkavität 7 mit Kunststoffpartikeln aus einem sich von dem ersten Kunststoffpartikelmaterial und/oder dem zweiten Kunststoffpartikelmaterial in wenigstens einem chemischen Parameter und/oder physikalischen Parameter unterscheidenden dritten Kunststoffpartikelmaterial über die dritte Befülleinrichtung 4 zur Befüllung des dritten Teilvolumens TV3 der Formwerkzeugkavität 7 mit Kunststoffpartikeln aus dem dritten Kunststoffpartikelmaterial durchzuführen, wenn das Formwerkzeugelement 9 in die erste Ausrichtung und/oder Position bewegt ist. Die Steuerungseinrichtung 15 ist insbesondere eingerichtet, Steuerungsinformationen zur Steuerung des Betriebs der dritten Befülleinrichtung 4 zu erzeugen, um das dritte Teilvolumen TV3 mit Kunststoffpartikeln aus dem dritten Kunststoffpartikelmaterial zu befüllen. Die dritte Befülleinrichtung 4 kann entsprechend auf Grundlage der Steuerungsinformationen betrieben sein bzw. werden.

Die Steuerungseinrichtung 15 ist - wie in Fig. 14 gezeigt - eingerichtet, wenigstens eine Maßnahme zum Verbinden der in das dritte Teilvolumen TV3 der Formwerkzeugkavität 7 eingefüllten Kunststoffpartikel aus dem dritten Kunststoffpartikelmaterial unter Ausbildung eines aus dem dritten Kunststoffpartikelmaterial gebildeten dritten Formteils FT3 durchzuführen, wenn das dritte Teilvolumen TV3 der Formwerkzeugkavität 7 mit Kunststoffpartikeln aus dem dritten Kunststoffpartikelmaterial befüllt ist. Die Durchführung der Maßnahme zum Verbinden der Kunststoffpartikel aus dem dritten Kunststoffpartikelmaterial resultiert sonach in der Ausbildung eines aus dem dritten Kunststoffpartikelmaterial bestehenden dritten Formteils FT3, welches ein Teilvolumen der Formwerkzeugkavität 7 einnimmt. Das dritte Formteil FT3 kann unter Ausbildung des herzustellenden mehrkomponentigen Partikelschaumbauteils insbesondere form-, und/oder kraft- und/oder stoffschlüssig mit dem ersten Formteil FT1 und/oder dem zweiten Formteil FT2 verbunden sein.

Die Maßnahme zum Verbinden von in die Formwerkzeugkavität 7 eingefüllten Kunststoffpartikeln aus dem dritten Kunststoffpartikelmaterial kann - wie in Fig. 14 durch die geschwungenen Linien angedeutet - ein Einbringen eines temperierten Prozessfluids in das dritte Teilvolumen TV3 der Formwerkzeugkavität 7 über formwerkzeug(körper)wandungsseitige Öffnungen 8 und/oder formwerkzeugelementseitige Ausströmöffnungen 11.3 umfassen. Insbesondere es möglich, dass die Maßnahme durch Einbringen eines Prozessfluids nur über die formwerkzeugelementseitigen Ausströmöffnungen 11.3 erfolgt.

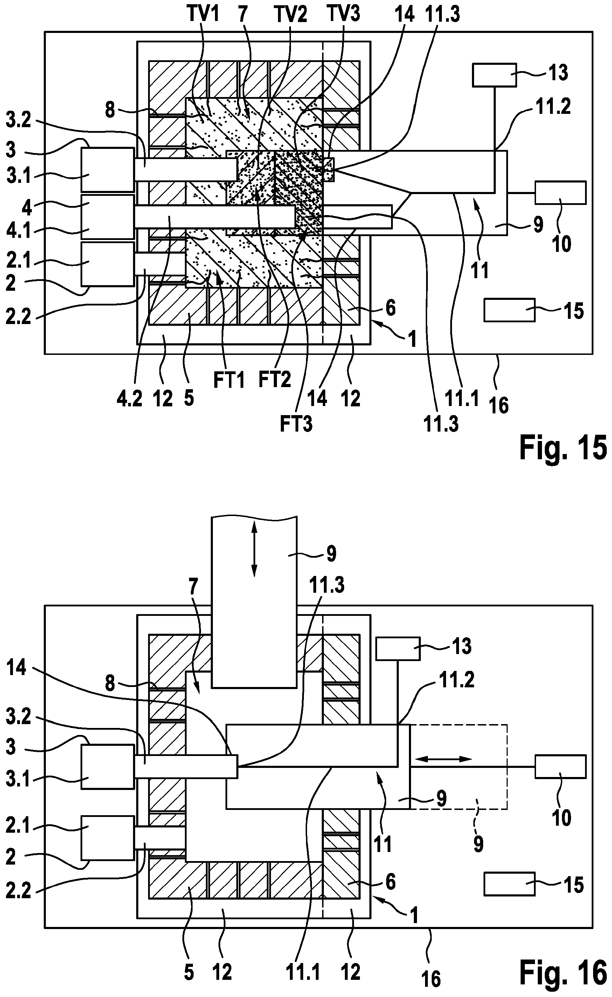

Die Steuerungseinrichtung 15 kann - wie in Fig. 15 gezeigt - ferner zur Steuerung von Maßnahmen zum Evakuieren und/oder Kühlen der Formwerkzeugkavität 7 eingerichtet sein. Die Steuerungseinrichtung 15 ist insbesondere eingerichtet, eine Maßnahme zum Evakuieren und/oder Kühlen der Formwerkzeugkavität 7 über eine Einrichtung zum Evakuieren und/oder Kühlen der Formwerkzeugkavität 7 durchzuführen, wenn die Maßnahme zum Verbinden von in die Formwerkzeugkavität 7 eingefüllten Kunststoffpartikeln aus dem dritten Kunststoffpartikelmaterial abgeschlossen ist. Das Evakuieren und/oder Kühlen der Formwerkzeugkavität 7 kann - wie in Fig. 15 durch die geschwungenen Linien angedeutet - z. B. über einzelne, mehrere oder sämtliche formwerkzeug(körper)wandungsseitige Öffnungen 8 und/oder formwerkzeugelementseitige Ausströmöffnungen 11.3 erfolgen.

Schließlich kann ein Entnehmen des mehrkomponentigen Partikelschaumbauteils aus der Formwerkzeugkavität 7 erfolgen.

Fig. 16 zeigt eine Prinzipdarstellung eines Formwerkzeugs 1 gemäß einem weiteren Ausführungsbeispiel.

Anhand von Fig. 16 ist beispielhaft ersichtlich, dass das Formwerkzeug 1 auch mehrere entsprechende Formwerkzeugelemente 9 umfassen kann. Mithin können sich wenigstens zwei Formwerkzeugelemente 9 in ihren jeweiligen weiteren Ausrichtungen und/oder Positionen von derselben oder unterschiedlichen Formwerkzeug(körper)wandungen in die Formwerkzeugkavität 7 erstrecken. Entsprechende Formwerkzeugelemente 9 können sich dabei in ihren jeweiligen weiteren Ausrichtungen und/oder Positionen, wie beispielhaft in Fig. 16 gezeigt, nicht-parallel oder parallel zueinander in die Formwerkzeugkavität 7 erstrecken. Wie erwähnt, ist die in Fig. 16 gezeigte Konfiguration des Formwerkzeugs 1 rein beispielhaft zu verstehen, grundsätzlich kann jedem Formwerkzeugkörper 5, 6 bzw. jeder Formwerkzeug(körper)wandung wenigstens ein entsprechendes Formwerkzeugelement 9 zugeordnet sein.

Für alle Ausführungsbeispiele gilt, dass jeweilige Formwerkzeugelemente 9 typischerweise in einer hierfür formwerkzeug(körper)seitigen Aufnahme bzw. Lagerung (nicht gezeigt) gelagert ist. Das Formwerkzeug 1 kann sonach mit, z. B. bohrungsartigen bzw. -förmigen, Aufnahme- bzw. Lagerungsabschnitten - hierbei kann es sich konkret z. B. um Lagerbohrungen handeln, in welche ein entsprechendes Formwerkzeugelement 9, insbesondere typischerweise passgenau, einsetzbar ist - ausgestattet sein.

Für alle Ausführungsbeispiele gilt ferner, dass seitens des Formwerkzeugelements 9 oder seitens des Formwerkzeugs 1, d. h. insbesondere seitens des Formwerkzeugkörpers 6, Schließeinrichtungen (nicht gezeigt) vorgesehen sein können, welche wie in den Fig. beispielhaft gezeigt, verhindern, dass Kunststoffpartikel in die jeweiligen formwerkzeugelementseitige(n) Ausnehmungen 14 gelangen können.

Aus den Fig. 1 - 15 ergibt sich, dass das jeweilige Partikelschaumbauteil durch die jeweiligen Formteile FT1 - F3 gebildet ist bzw. diese umfasst.

Mit den in den Fig. gezeigten Formwerkzeugen 1 lässt sich ein Verfahren zur Verarbeitung von expandierbaren oder expandierten Kunststoffpartikeln Herstellung eines mehrkomponentigen Partikelschaumbauteils implementieren.

Das Verfahren beinhaltet insbesondere die im Zusammenhang mit dem Betrieb des Formwerkzeugs 1 erläuterten Bewegungen des Formwerkzeugelements 9, die Füllvorgänge jeweiliger durch entsprechende Bewegungen des Formwerkzeugelements 9 erzeugter Teilvolumina TV1 - TV3 der Formwerkzeugkavität 7 und die Verbindungsvorgänge jeweiliger in jeweilige Teilvolumina TV1 - TV3 der Formwerkzeugkavität 7 eingefüllter Kunststoffpartikel.

## Patentansprüche

1. Formwerkzeug (1) zur Verarbeitung von expandierbaren oder expandierten Kunststoffpartikeln zur Herstellung eines mehrkomponentigen Partikelschaumbauteils, umfassend eine durch Formwerkzeugwandungen begrenzte Werkzeugkavität (7), aufweisend wenigstens ein, insbesondere schieberartiges oder -förmiges, Formwerkzeugelement (9), wobei
das wenigstens eine Formwerkzeugelement (9) zwischen einer ersten Ausrichtung und/oder Position und wenigstens einer weiteren Ausrichtung und/oder Position, in welcher es zumindest abschnittsweise in die Formwerkzeugkavität (7) ragt, bewegbar gelagert ist, und wobei
das wenigstens eine Formwerkzeugelement (9) mit einer wenigstens einen sich innerhalb des Formwerkzeugelements (9) erstreckenden, von einem Prozessfluid durchströmbaren Strömungskanal (11.1) aufweisenden Strömungskanalstruktur (11) ausgebildet ist oder eine solche umfasst, **dadurch gekennzeichnet, dass**
die Strömungskanalstruktur (11) mit einer eigenen,
insbesondere von einer Prozessfluidversorgungseinrichtung (13) der Formwerkzeugkavität (7) unabhängig betreibbaren, Prozessfluidversorgungseinrichtung (12) verbindbar oder verbunden ist.

2. Formwerkzeug nach Anspruch 1, **dadurch gekennzeichnet, dass** das wenigstens eine Formwerkzeugelement (9), insbesondere die wenigstens eine Strömungskanalstruktur (11), zumindest abschnittsweise, gegebenenfalls vollständig, in einem additiven Fertigungsverfahren ausgebildet ist.

3. Formwerkzeug nach Anspruch 1 oder 2, **dadurch gekennzeichnet, dass** die Strömungskanalstruktur (11) eine durch mehrere gitterartig oder -förmig angeordnete oder ausgebildete Strukturelemente, umfassende Gitterstruktur umfasst.

4. Formwerkzeug nach einem der vorhergehenden Ansprüche, **dadurch gekennzeichnet, dass** das wenigstens eine Formwerkzeugelement (9) mit wenigstens einer, insbesondere düsenartigen oder -förmigen, Ausströmöffnung (11.3) ausgebildet ist oder eine solche umfasst, über welche ein durch die Strömungskanalstruktur (11) strömendes Prozessfluid aus dem wenigstens einen Formwerkzeugelement (9) in die Formwerkzeugkavität (7) ausströmbar ist.

5. Formwerkzeug nach einem der vorhergehenden Ansprüche, **gekennzeichnet durch** eine Steuerungseinrichtung (15) zur Steuerung von Bewegungen des wenigstens einen Formwerkzeugelements (9) von der ersten Ausrichtung und/oder Position in die wenigstens eine weitere Ausrichtung und/oder Position, und umgekehrt, wobei die Steuerungseinrichtung (15) eingerichtet ist, das wenigstens eine Formwerkzeugelement (9) vor Befüllen der Formwerkzeugkavität (7) mit Kunststoffpartikeln aus einem ersten Kunststoffpartikelmaterial in die zweite Ausrichtung und/oder Position zu bewegen, insbesondere derart, dass durch den oder die Formwerkzeugwandungen und das wenigstens eine in die weitere Ausrichtung und/oder Position bewegte Formwerkzeugelement (9) ein mit Kunststoffpartikeln aus einem ersten Kunststoffpartikelmaterial befüllbares erstes Teilvolumen (TV1) der Formwerkzeugkavität (7) begrenzt bzw. definiert ist.

6. Formwerkzeug nach Anspruch 5, **gekennzeichnet durch** eine Steuerungseinrichtung (15) zur Steuerung von Befüllvorgängen der Formwerkzeugkavität (7) mit Kunststoffpartikeln, wobei die Steuerungseinrichtung eingerichtet ist, einen Befüllvorgang des ersten Teilvolumens (TV1) der Formwerkzeugkavität (7) mit Kunststoffpartikeln aus einem ersten Kunststoffpartikelmaterial über eine Befülleinrichtung (2 - 4), insbesondere über eine erste Befülleinrichtung (2), durchzuführen, wenn das wenigstens eine Formwerkzeugelement (9)in die weitere Ausrichtung und/oder Position bewegt ist.

7. Formwerkzeug nach Anspruch 5 oder 6, **gekennzeichnet durch** eine Steuerungseinrichtung zur Steuerung von Maßnahmen zum Verbinden von in die Formwerkzeugkavität (7) eingefüllten Kunststoffpartikeln, wobei die Steuerungseinrichtung eingerichtet ist, wenigstens eine Maßnahme zum Verbinden der in das erste Teilvolumen (TV1) der Formwerkzeugkavität (7) eingefüllten Kunststoffpartikel aus dem ersten Kunststoffpartikelmaterial unter Ausbildung eines aus dem ersten Kunststoffpartikelmaterial gebildeten ersten Formteils (FT1) durchzuführen, wenn das erste Teilvolumen (TV1) der Formwerkzeugkavität (7) mit Kunststoffpartikeln aus dem ersten Kunststoffpartikelmaterial befüllt ist.

8. Formwerkzeug nach Anspruch 7, **dadurch gekennzeichnet, dass** die Maßnahme zum Verbinden von in die Formwerkzeugkavität (7) eingefüllten Kunststoffpartikeln aus dem ersten Kunststoffpartikelmaterial ein Einbringen eines temperierten Prozessfluids, insbesondere Dampf, in das erste Teilvolumen (TV1) der Formwerkzeugkavität (7), insbesondere über formwerkzeug(körper)wandungsabschnittseitige Öffnungen (8) und/oder formwerkzeugelementseitige Ausströmöffnungen (11.3), umfasst.

9. Formwerkzeug nach einem der Ansprüche 5 bis 8, **dadurch gekennzeichnet, dass** die zur Steuerung von Bewegungen des wenigstens einen Formwerkzeugelements (9) eingerichtete Steuerungseinrichtung (15) eingerichtet ist, das wenigstens eine Formwerkzeugelement (9) von der weiteren Ausrichtung und/oder Position in die erste Ausrichtung und/oder Position zu bewegen, wenn die Maßnahme zum Verbinden der Kunststoffpartikel aus dem ersten Kunststoffpartikelmaterial abgeschlossen ist, insbesondere derart, dass durch das erste Formteil (FT1) und/oder die Formwerkzeugwandungen und/oder das wenigstens eine in die erste Ausrichtung und/oder Position bewegte Formwerkzeugelement (9) ein mit Kunststoffpartikel aus einem weiteren Kunststoffpartikelmaterial befüllbares zweites Teilvolumen (TV2) der Formwerkzeugkavität (7) begrenzt bzw. definiert ist.

10. Formwerkzeug nach einem der Ansprüche 5 bis 9, **dadurch gekennzeichnet, dass** die zur Steuerung von Befüllvorgängen der Formwerkzeugkavität (7) eingerichtete Steuerungseinrichtung (15) eingerichtet ist, einen Befüllvorgang des zweiten Teilvolumens (TV2) der Formwerkzeugkavität (7) mit Kunststoffpartikeln aus einem sich von dem ersten Kunststoffpartikelmaterial in wenigstens einem chemischen Parameter und/oder physikalischen Parameter unterscheidenden weiteren Kunststoffpartikelmaterial über eine Befülleinrichtung (3, 4), insbesondere über eine zweite (3) Befülleinrichtung, durchzuführen, wenn das wenigstens eine Formwerkzeugelement (9) in die erste Ausrichtung und/oder Position bewegt ist.

11. Formwerkzeug nach einem der Ansprüche 5 bis 10, **dadurch gekennzeichnet, dass** die zur Steuerung von Maßnahmen zum Verbinden von in die Formwerkzeugkavität (7) eingefüllten Kunststoffpartikeln eingerichtete Steuerungseinrichtung (15) eingerichtet ist, wenigstens eine Maßnahme zum Verbinden der in das zweite Teilvolumen (TV2) der Formwerkzeugkavität (7) eingefüllten Kunststoffpartikel aus dem weiteren Kunststoffpartikelmaterial unter Ausbildung eines aus dem weiteren Kunststoffpartikelmaterial gebildeten zweiten Formteils (FT2) durchzuführen, wenn das zweite Teilvolumen (TV2) der Formwerkzeugkavität (7) mit Kunststoffpartikeln aus dem weiteren Kunststoffpartikelmaterial befüllt ist, wobei optional die Maßnahme zum Verbinden von in die Formwerkzeugkavität (7) eingefüllten Kunststoffpartikeln aus dem weiteren Kunststoffpartikelmaterial ein Einbringen eines temperierten Prozessfluids in das zweite Teilvolumen (TV2) der Formwerkzeugkavität (7), insbesondere über formwerkzeug(körper)wandungsabschnittseitige Öffnungen (8) und/oder formwerkzeugelementseitige Ausströmöffnungen (11.3), umfasst.

12. Formwerkzeug nach einem der Ansprüche 5 bis 11, **gekennzeichnet durch** eine Steuerungseinrichtung (15) zur Steuerung von Maßnahmen zum Evakuieren und/oder Kühlen der Formwerkzeugkavität (7), wobei die Steuerungseinrichtung (15) eingerichtet ist, eine Maßnahme zum Evakuieren und/oder Kühlen der Formwerkzeugkavität (7) über eine Einrichtung zum Evakuieren und/oder Kühlen der Formwerkzeugkavität (7) durchzuführen, wenn die Maßnahme zum Verbinden von in die Formwerkzeugkavität (7) eingefüllten Kunststoffpartikeln aus dem weiteren Kunststoffpartikelmaterial abgeschlossen ist.

13. Formwerkzeug nach einem der vorhergehenden Ansprüche, **gekennzeichnet durch** mehrere entsprechend zwischen einer ersten Ausrichtung und/oder Position und wenigstens einer weiteren Ausrichtung und/oder Position bewegbar gelagerte Formwerkzeugelemente (9), wobei optional wenigstens zwei Formwerkzeugelemente (9) sich in ihren jeweiligen weiteren Ausrichtungen und/oder Positionen parallel oder nicht-parallel zueinander in die Formwerkzeugkavität (7) erstrecken.

14. Vorrichtung (16) zur Verarbeitung von expandierbaren oder expandierten Kunststoffpartikeln Herstellung eines mehrkomponentigen Partikelschaumbauteils, **gekennzeichnet durch** wenigstens ein Formwerkzeug (1) nach einem der Ansprüche 1 bis 13, wenigstens eine Befülleinrichtung (2 - 4) zur Befüllung der Formwerkzeugkavität (7) des Formwerkzeugs (1), wenigstens eine Antriebseinrichtung (10) zur Erzeugung einer Antriebskraft und/oder eines Antriebsmoments, über welche(s) sich das wenigstens eine Formwerkzeugelement (9) in jeweilige Ausrichtungen und/oder Positionen bewegen lässt, sowie wenigstens eine Prozessfluidversorgungseinrichtung (12, 13) zur Versorgung der Formwerkzeugkavität (7) mit einem Prozessfluid.

## Claims

1. Moulding tool (1) for processing expandable or expanded plastic particles for the production of a multi-component particle foam component, comprising a tool cavity (7) limited by molding tool walls, having
at least one, in particular slide-like or -shaped, moulding tool element (9), wherein
the at least one molding tool element (9) is movably mounted between a first orientation and / or position and at least one further orientation and / or position, in which it protrudes at least in sections into the molding tool cavity (7), and wherein
The at least one molding tool element (9) is formed with or comprises at least one flow channel structure (11) extending within the molding tool element (9) which can be flowed through by a process fluid, **characterized in that** the flow channel structure (11) can be connected or connected to its own process fluid supply device (13) of the molding tool cavity (7) which can be operated independently, process fluid supply device (12).

2. Moulding tool according to claim 1, **characterized in that** the at least one molding element (9), in particular the at least one flow channel structure (11), at least in sections, optionally complete, is formed in an additive manufacturing process.

3. Moulding tool according to claim 1 or 2, **characterized in that** the flow channel structure (11) comprises a comprehensive lattice structure arranged or formed by several lattice-like or -shaped structural elements.

4. Moulding tool according to any one of the preceding claims, **characterized in that** the at least one mold element (9) is formed with at least one, in particular nozzle-like or -shaped, outflow opening (11.3) or comprises one through which a flowing through the flow channel structure (11) process fluid from the at least one mold element (9) can be outflowed into the moulding tool cavity (7).

5. Moulding tool according to one of the preceding claims, **characterized by** a control device (15) for controlling movements of the at least one mold element (9) from the first orientation and / or position to the at least one further orientation and / or position, and vice versa, wherein the control device (15) is provided to move the at least one mold element (9) before filling the moulding tool cavity (7) with plastic particles from a first plastic particle material in the second orientation and / or position, in particular such that by the or the mold walls and the at least one in the further orientation and / or position moved mold element (9) a plastic particles from a first plastic particle material fillable first partial volume (TV1) of the moulding tool cavity (7) is limited or defined.

6. Moulding tool according to claim 5, **characterized by** a control device (15) for controlling filling operations of the moulding tool cavity (7) with plastic particles, wherein the control device is configured to perform a filling operation of the first partial volume (TV1) of the moulding tool cavity (7) with plastic particles of a first plastic particle material via a filling device (2 - 4), in particular via a first filling device (2), when the at least one mold element (9) is moved to the further orientation and / or position.

7. Moulding tool according to claim 5 or 6, **characterized by** a control device for controlling measures for connecting plastic particles filled into the moulding tool cavity (7), wherein the control device is arranged to perform at least one measure for connecting the plastic particles filled into the first partial volume (TV1) of the moulding tool cavity (7) from the first plastic particle material forming a first mold part formed from the first plastic particle material (FT1) when the first partial volume (TV1) of the moulding tool cavity (7) is filled with plastic particles from the first plastic particle material.

8. Molding tool according to claim 7, **characterized in that** the measure for connecting plastic particles from the first plastic particle material filled into the moulding tool cavity (7) comprises an introduction of a tempered process fluid, in particular steam, into the first partial volume (TV1) of the moulding tool cavity (7), in particular via mold (body) wall portion openings (8) and / or mold element side outflow openings (11.3).

9. Moulding tool according to one of claims 5 to 8, **characterized in that** the for controlling movements of the at least one molding element (9) is arranged control device (15) to move the at least one molding element (9) from the further orientation and / or position to the first orientation and / or position when the measure for connecting the plastic particles from the first plastic particle material is completed, in particular in such a way that by the first molding part (FT1) and / or the mold walls and / or the at least one in the first orientation and / or position moved molding element (9) a fillable with plastic particles from another plastic particle material second partial volume (TV2) of the moulding tool cavity (7) is limited or defined.

10. Moulding tool according to any one of claims 5 to 9, **characterized in that** the control device (15) set up for controlling filling processes of the moulding tool cavity (7) is configured to perform a filling process of the second partial volume (TV2) of the moulding tool cavity (7) with plastic particles from a further plastic particle material differing from the first plastic particle material in at least one chemical parameter and/or physical parameter via a filling device (3, 4), in particular via a second (3) filling device, if the at least one molding tool element (9) is moved into the first orientation and/or position.

11. Moulding tool according to any one of claims 5 to 10, **characterized in that** the control device (15) provided for controlling measures for connecting plastic particles filled into the moulding tool cavity (7) is configured to perform at least one measure for connecting the plastic particles filled into the second partial volume (TV2) of the moulding tool cavity (7) from the further plastic particle material forming a second mold part formed from the further plastic particle material (FT2) when the second partial volume (TV2) of the moulding tool cavity (7) is filled with plastic particles from the further plastic particle material, wherein optionally the measure for connecting plastic particles filled into the moulding tool cavity (7) from the further plastic particle material includes an introduction of a tempered process fluid into the second partial volume (TV2) of the moulding tool cavity (7), in particular via mold (body) wall section openings (8) and/or mold side outlets (113).

12. Moulding tool according to any one of claims 5 to 11, **characterized by** a control device (15) for controlling measures for evacuating and / or cooling the moulding tool cavity (7), wherein the control device (15) is configured to perform a measure for evacuating and / or cooling the moulding tool cavity (7) via a device for evacuating and / or cooling the moulding tool cavity (7), when the measure for connecting plastic particles filled into the moulding tool cavity (7) from the further plastic particle material is completed.

13. Moulding tool according to one of the preceding claims, **characterized by** a plurality of movably mounted mold elements (9) correspondingly between a first orientation and / or position and at least one further orientation and / or position, wherein optionally at least two mold elements (9) extend in their respective further orientations and / or positions parallel or non-parallel to each other in the moulding tool cavity (7).

14. Device (16) for processing expandable or expanded plastic particles Production of a multi-component particle foam component, **characterized by** at least one molding tool (1) according to one of claims 1 to 13, at least one filling device (2 - 4) for filling the molding tool cavity (7) of the molding tool (1), at least one drive device (10) for generating a drive force and / or a drive torque, via which the at least one molding tool element (9) can be moved in respective orientations and / or positions, and at least one process fluid supply device (12, 13) for supplying the molding tool cavity (7) with a process fluid.

## Revendications

1. Outil de formage (1) pour le traitement de particules de plastique expansibles ou expansées en vue de la fabrication d'un composant en mousse à particules multicomposants, comprenant une cavité d'outil limitée par les parois de l'outil de formage (7),
wenigstens ein, insbesondere schieberartiges oder -förmiges, Formwerkzeugelement (9), wobei
au moins un élément d'outil de moulage (9) entre une première orientation et/ou position et au moins une autre orientation et/ou position dans laquelle il s'avance au moins par sections dans la cavité de l'outil de moulage (7), et
dont au moins un élément d'outillage de moule (9) est constitué ou comprend une structure de canal d'écoulement (11) s'étendant à l'intérieur de l'élément d'outillage de moule (9) et traversant un fluide de processus (11.1), **caractérisée en ce que** la structure de canal d'écoulement (11) est reliée ou reliée à un dispositif d'alimentation en fluide de processus (12) distinct, utilisable indépendamment, notamment, d'un dispositif d'alimentation en fluide de processus (13) de la cavité d'outillage de moule (7).

2. Outil de moulage selon la revendication 1, **caractérisé en ce qu'**au moins un élément d'outil de moulage (9), en particulier au moins une structure de canal d'écoulement (11), au moins par section, le cas échéant complètement, est formé dans un procédé de fabrication additive.

3. Outil de formage selon la revendication 1 ou 2, **caractérisé en ce que** la structure du canal d'écoulement (11) comprend une structure de grille complète, disposée ou formée par plusieurs éléments de structure en forme ou en forme de grille.

4. Outil de formage selon l'une quelconque des revendications précédentes, **caractérisé en ce qu'**au moins un élément d'outil de formage (9) est formé avec au moins un orifice d'écoulement (11.3), en particulier en forme de buse ou en forme de buse, ou **en ce qu'**il comprend un orifice d'écoulement (11.3) par lequel un fluide de processus s'écoulant à travers la structure du canal d'écoulement (11) peut s'écouler d'au moins un élément d'outil de formage (9) dans la cavité de l'outil de formage (7).

5. Outil de formage selon l'une quelconque des revendications précédentes, **caractérisé par** un dispositif de commande (15) destiné à contrôler les mouvements d'au moins un élément d'outil de formage (9) de la première orientation et/ou position vers au moins une autre orientation et/ou position, et vice versa, dans lequel le dispositif de commande (15) est installé pour déplacer au moins un élément d'outil de formage (9) avant de remplir la cavité de l'outil de formage (7) avec des particules en plastique d'un premier matériau particulaire en plastique dans la deuxième orientation et/ou position, en particulier de telle sorte que le ou les parois de l'outil de formage et au moins un élément d'outil de formage (9) déplacé vers l'autre orientation et/ou position limitent ou définissent un premier volume partiel (TV1) de la cavité de l'outil de formage (7) pouvant être rempli de particules en plastique d'un premier matériau particulaire en plastique.

6. Outil de formage selon la revendication 5, caractérisé en un dispositif de commande (15) pour commander des opérations de remplissage de la cavité de l'outil de formage (7) avec des particules de plastique, dans lequel le dispositif de commande est configuré pour effectuer un remplissage du premier volume partiel (TV1) de la cavité de l'outil de formage (7) avec des particules de plastique d'un premier matériau de particules de plastique via un dispositif de remplissage (2 - 4), en particulier via un premier dispositif de remplissage (2), si au moins un élément d'outil de formage (9) est déplacé vers l'orientation et/ou la position ultérieures.

7. Outil de moulage selon la revendication 5 ou 6, caractérisé en un dispositif de commande pour la commande de mesures pour l'assemblage de particules de plastique chargées dans la cavité de l'outil de moulage (7), dans lequel le dispositif de commande est configuré pour effectuer au moins une mesure pour l'assemblage des particules de plastique du premier matériau de particules de plastique chargées dans le premier volume partiel (TV1) de la cavité de l'outil de moulage (7), en formant un premier moule (FT1) formé à partir du premier matériau de particules de plastique, lorsque le premier volume partiel (TV1) de la cavité de l'outil de moulage (7) est rempli de particules de plastique du premier matériau de particules de plastique.

8. Outil de formage selon la revendication 7, **caractérisé en ce que** la mesure d'assemblage de particules de plastique remplies dans la cavité de l'outil de formage (7) à partir du premier matériau de particules de plastique comprend l'introduction d'un fluide de processus tempéré, en particulier de la vapeur, dans le premier volume partiel (TV1) de la cavité de l'outil de formage (7), en particulier via des ouvertures latérales de section de paroi (8) et/ou des ouvertures d'écoulement latérales d'élément de moule (11.3).

9. Outil de formage selon l'une quelconque des revendications 5 à 8, **caractérisé en ce que** le dispositif de commande (15) mis en place pour contrôler les mouvements d'au moins un élément d'outil de formage (9) est conçu pour déplacer au moins un élément d'outil de formage (9) de l'orientation et/ou de la position ultérieures vers la première orientation et/ou la première position lorsque la mesure de liaison des particules plastiques du premier matériau particulaire plastique est achevée, en particulier de telle sorte que le premier élément de formage (FT1) et/ou les parois de l'outil de formage et/ou au moins un élément d'outil de formage (9) déplacé vers la première orientation et/ou la première position limite ou définit un deuxième volume partiel (TV2) de la cavité de l'outil de formage (7) pouvant être rempli de particules plastiques d'un autre matériau particulaire plastique.

10. Outil de formage selon l'une quelconque des revendications 5 à 9, **caractérisé en ce que** le dispositif de commande (15) mis en place pour commander les opérations de remplissage de la cavité de l'outil de formage (7) est conçu pour effectuer une opération de remplissage du deuxième sous-volume (TV2) de la cavité de l'outil de formage (7) avec des particules de plastique provenant d'un autre matériau de particules de plastique différent du premier matériau de particules de plastique dans au moins un paramètre chimique et/ou physique via un dispositif de remplissage (3, 4), en particulier via un deuxième (3) dispositif de remplissage, si au moins un élément d'outil de formage (9) est déplacé dans le premier alignement et/ou la première position.

11. Outil de formage selon l'une quelconque des revendications 5 à 10, **caractérisé en ce que** le dispositif de commande mis en place pour commander des opérations d'assemblage de particules plastiques remplies dans la cavité de l'outil de formage (7) est mis en place pour effectuer au moins une opération d'assemblage des particules plastiques de l'autre matériau de particules plastiques remplies dans le deuxième volume partiel (TV2) de la cavité de l'outil de formage (7) sous la formation d'une deuxième pièce plastique formée à partir de l'autre matériau de particules plastiques (FT2), lorsque le deuxième volume partiel (TV2) de la cavité de l'outil de formage (7) est rempli de particules plastiques de l'autre matériau de particules plastiques, l'opération d'assemblage facultative des particules plastiques de l'autre matériau de particules plastiques remplies dans la cavité de l'outil de formage (7) comprenant l'insertion d'un fluide de processus tempéré dans le deuxième volume partiel (TV2) de la cavité (7) de l'outil de formage, en particulier les ouvertures latérales (8) et/ou les ouvertures latérales de l'outil de formage (113).

12. Outil de formage selon l'une quelconque des revendications 5 à 11, caractérisé en un dispositif de commande (15) pour commander des mesures d'évacuation et/ou de refroidissement de la cavité de l'outil de formage (7), dans lequel le dispositif de commande (15) est configuré pour effectuer une mesure d'évacuation et/ou de refroidissement de la cavité de l'outil de formage (7) via un dispositif d'évacuation et/ou de refroidissement de la cavité de l'outil de formage (7), lorsque la mesure de raccordement des particules de plastique remplies dans la cavité de l'outil de formage (7) de la matière particulaire plastique supplémentaire est achevée.

13. Outil de formage selon l'une quelconque des revendications précédentes, **caractérisé par** plusieurs éléments d'outil de formage qui peuvent être déplacés en conséquence entre une première orientation et/ou position et au moins une autre orientation et/ou position (9), dans lesquels, en option, au moins deux éléments d'outil de formage (9) s'étendent dans leurs autres orientations et/ou positions respectives, parallèles ou non parallèles l'un à l'autre, dans la cavité de l'outil de formage (7).

14. Dispositif (16) pour le traitement de particules en plastique expansibles ou expansibles Fabrication d'un composant en mousse particulaire multicomposant **caractérisé par** au moins un outil de formage (1) selon l'une quelconque des revendications 1 à 13, au moins un dispositif de remplissage (2 à 4) pour remplir la cavité de l'outil de formage (7) de l'outil de formage (1), au moins un dispositif d'entraînement (10) pour générer une force d'entraînement et/ou un moment d'entraînement sur lequel au moins un élément d'outil de formage (9) peut être déplacé dans des orientations et/ou des positions respectives, et au moins un dispositif d'alimentation en fluide de processus (12, 13) pour alimenter la cavité de l'outil de formage (7) avec un fluide de processus.
